(19) Europäisches Patentamt / European Patent Office / Office européen des brevets

(11) **EP 3 608 192 A2**

(12) **EUROPEAN PATENT APPLICATION**

(43) Date of publication:
12.02.2020 Bulletin 2020/07

(51) Int Cl.:
**B60W 30/16** $^{(2020.01)}$ **B60W 30/12** $^{(2020.01)}$
**B60W 50/14** $^{(2020.01)}$

(21) Application number: **19175438.1**

(22) Date of filing: **20.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.08.2018 JP 2018150564**

(71) Applicant: **TOYOTA JIDOSHA KABUSHIKI KAISHA**
**Toyota-Shi,**
**Aichi-Ken 471-8571 (JP)**

(72) Inventor: **YASUE, Tomoyoshi**
**Aichi-ken, 471-8571 (JP)**

(74) Representative: **J A Kemp LLP**
**14 South Square**
**Gray's Inn**
**London WC1R 5JJ (GB)**

(54) **DRIVING ASSIST DEVICE**

(57) A driving assist device includes: a driving operation element (11a, 12a, SW); an information acquisition unit (15, 17) configured to acquire traveling state relevant information indicating a traveling state; a driving assist control unit (10, 20, 30, 40) configured to control the own vehicle such that the own vehicle travels in a state where a target traveling condition is met; a determination unit configured to determine whether the traveling state changed by the operation of the driving operation element is a specific state; a request generation device (60, 61) configured to generate a condition change request when a predetermined operation or input is performed while the own vehicle is in the driving assist control; and a condition change unit configured to change the target traveling condition based on the traveling state relevant information when the condition change request is generated in a case where it is determined that the changed traveling state is the specific state.

## FIG. 3B

EP 3 608 192 A2

**Description**

BACKGROUND OF THE INVENTION

1. Field of the Invention

The invention relates to a driving assist device.

2. Description of Related Art

A driving assist device (hereinafter, referred to as "first related device") as a related art executes adaptive cruise control (ACC). That is, the first related device causes an own vehicle to travel such that the inter-vehicle distance between the own vehicle and a preceding vehicle that travels in front of the own vehicle is kept at a target inter-vehicle distance. The target inter-vehicle distance is a distance that is obtained by multiplying a target inter-vehicle time by the vehicle speed of the own vehicle. In other words, the inter-vehicle time is a time required for the own vehicle to reach the position of the preceding vehicle. In addition, in the first related device, a driver can set the target inter-vehicle time to one of three levels (long, middle, short), by operating a selector switch (see Japanese Patent Application Publication No. 2009-040414, for example). It can be said that the target inter-vehicle time or target inter-vehicle distance is a parameter for specifying a target traveling condition that is to be met in adaptive cruise control.

Further, a driving assist device (hereinafter, referred to as "second related device") as another related art executes a known lane keeping control during the execution of adaptive cruise control. That is, the second related device executes a steering assist control to change a steering angle such that the own vehicle travels along a target traveling line (for example, a centerline between right and left road mark lines) set in a "traveling lane specified by right and left road mark lines" (see Japanese Patent Application Publication No. 2016-218649, for example). It can be said that the target traveling line is a parameter for specifying a target traveling condition that is to be met in lane keeping control.

SUMMARY OF THE INVENTION

However, in the first related device, a target inter-vehicle distance matching driver's preference cannot be set by any of the above-described three levels of the target inter-vehicle time, in some cases. Furthermore, in the second related device, the driver cannot change the position of the target traveling line (the position in the road width direction in the traveling lane), and therefore, the target traveling line does not match the driver's preference, in some cases.

The invention provides a driving assist device that can set a traveling condition matching the driver's preference as a target traveling condition in a driving assist control (for example, adaptive cruise control or lane keeping control), during execution of the driving assist control.

A driving assist device according to the aspect of the invention includes: a driving operation element that is operated by a driver of an own vehicle, a driving state of the own vehicle changing when the driving operation element is operated by the driver; an information acquisition unit configured to acquire traveling state relevant information indicating a traveling state that includes a state of a periphery of the own vehicle and the driving state of the own vehicle; a driving assist control unit configured to control the own vehicle based on the traveling state relevant information such that the own vehicle travels in a state where a target traveling condition is met, the target traveling condition being a condition to be met in driving assist control; a determination unit configured to determine, based on the traveling state relevant information, whether the traveling state changed by the operation of the driving operation element is a specific state, the specific state being a state where the target traveling condition is permitted to be changed; a request generation device configured to accept a predetermined operation or a predetermined input by the driver and generate a condition change request when the predetermined operation or the predetermined input is performed while the own vehicle is in the driving assist control, the condition change request being a request by which the target traveling condition is changed; and a condition change unit configured to change the target traveling condition based on the traveling state relevant information when the condition change request is generated in a case where it is determined that the traveling state changed by the operation of the driving operation element is the specific state.

With the above aspect, during the execution of the driving assist control, the driver operates the driving operation element (for example, an accelerator operation element, a brake operation element, or a steering wheel described later), and thereby, changes the driving state of the own vehicle (that is, a traveling situation shown by the state of the periphery of the own vehicle and the driving state of the own vehicle), such that the driving state matches the driver's preference. Then, when the driver generates the condition change request using the request generation device, the target traveling condition is changed based on the traveling state relevant information at that time point, if the traveling state of the own vehicle is the specific state where the target traveling condition in the driving assist control is permitted to be changed. Consequently, with the aspect, the driver can realize a preferred traveling state by operating the driving operation element, and can set the target traveling condition in the driving assist control based on the traveling state at that time point. On the other hand, if the traveling state of the own vehicle is not the specific state where the target traveling condition is permitted to be changed, the target traveling condition is not changed, and therefore, it is possible to avoid the target traveling condition from being an inadequate condition.

In the above aspect, the driving assist device may further includes: a notification device configured to notify the driver of a result of a determination of whether the traveling state is the specific state, the determination being performed by the determination unit.

With the above configuration, the notification device notifies the driver of the result of the determination of whether the traveling state (traveling situation) of the own vehicle at the current time point is the "specific state (specific situation) in which the target traveling condition is permitted to be changed". Thereby, the driver can immediately recognize whether the target traveling condition can be changed.

In the above aspect, the driving assist control unit may be configured to: perform one of first driving assist control and second driving assist control, the first driving assist control being control for controlling the own vehicle such that the own vehicle travels in a state where a predetermined target traveling condition is met, and the second driving assist control being control for controlling the own vehicle such that the own vehicle travels in a state where the target traveling condition changed by the condition change request is met; and start to execute the second driving assist control when the target traveling condition is changed by the condition change request while performing the first driving assist control.

In the above aspect, the driving assist control unit may be configured to continue to execute the first driving assist control when the determination unit determines that the traveling state changed, while executing the first driving assist control, by the operation of the driving operation element.

In the above aspect, the driving assist control unit may be configured to start to execute the first driving assist control when the determination unit determines that the traveling state is not the specific state while performing the second driving assist control.

In the above aspect, the driving operation element may include at least one of an accelerator operation element and a brake operation element, the accelerator operation element being operated for accelerating the own vehicle, the brake operation element being operated for decelerating the own vehicle; the information acquisition unit may be configured to acquire information about a follow-up object vehicle and a follow-up inter-vehicle distance as the traveling state relevant information, the follow-up object vehicle being another vehicle that travels immediately ahead of the own vehicle, and the follow-up inter-vehicle distance being a distance between the follow-up object and the own vehicle; the driving assist control unit may be configured to execute adaptive cruise control by using, as the target traveling condition, a condition that the own vehicle travels so as to follow the follow-up object vehicle while keeping a predetermined target inter-vehicle distance between the own vehicle and the follow-up object vehicle; and the condition change unit may be configured to change the target traveling condition based on the follow-up inter-vehicle distance that is included in the traveling state relevant information at a change request acceptance time point, the change request acceptance time point being a time point when the condition change request is generated in the case where it is determined that the traveling state is the specific state.

With the above configuration, as the driving assist control, the driving assist control unit executes adaptive cruise control by which the own vehicle follows the follow-up object vehicle while the predetermined target inter-vehicle distance is kept between the own vehicle and the follow-up object vehicle. By operating at least one of the accelerator operation element and the brake operation element, the driver can change the traveling state of the own vehicle such that the traveling state matches the preference, during the execution of adaptive cruise control. Then, when the driver generates the condition change request using the request generation device in the case where it is determined that the traveling state is the specific state, the target traveling condition in adaptive cruise control is changed based on the actual follow-up inter-vehicle distance that is included in the traveling state relevant information at that time point (that is, the change request acceptance time point). Thus, with the above configuration, the driver can set the target traveling condition for adaptive cruise control that matches the driver's preference, during the execution of adaptive cruise control.

In the above aspect, the condition change unit may be configured to change the target traveling condition by setting, as the target inter-vehicle distance, the follow-up inter-vehicle distance included in the traveling state relevant information at the change request acceptance time point.

With the above configuration, the condition change unit sets the follow-up inter-vehicle distance that is included in the traveling state relevant information at the change request acceptance time point, as the target inter-vehicle distance. Consequently, the driving assist control unit in the aspect executes adaptive cruise control so as to keep the follow-up inter-vehicle distance at the change request acceptance time point. With the above configuration, the driver adjusts the inter-vehicle distance between the follow-up object vehicle and the own vehicle, to a distance matching the preference, by the operation of the driving operation element, and generates the condition change request at that time point. Thereby, it is possible to use the distance matching the preference, as the target inter-vehicle distance after that.

In the above aspect, the information acquisition unit may be configured to acquire information about a vehicle speed of the own vehicle as the traveling state relevant information; and the condition change unit may be configured to calculate an inter-vehicle time, by dividing the follow-up inter-vehicle distance that is included in the traveling state relevant information at the change request acceptance time point, by the vehicle speed of the own vehicle that is included in the traveling state relevant information at the change request acceptance time point, and change the target traveling condition, by setting a distance corresponding to a product of the calculated inter-vehicle time and the vehicle speed of the own vehicle that is included in the traveling state relevant information, as the target inter-vehicle distance.

With the above configuration, the condition change unit sets the distance corresponding to the product of the inter-vehicle time and the vehicle speed of the own vehicle at the change request acceptance time point, as the target inter-vehicle distance. Consequently, the driving assist control unit in the aspect executes adaptive cruise control so as to keep the inter-vehicle time at the change request acceptance time point. With the above configuration, the driver adjusts the inter-vehicle time between the follow-up object vehicle and the own vehicle, to a time matching the preference, by the operation of the driving operation element, and generates the condition change request at that time point. Thereby, it is possible to use an inter-vehicle distance corresponding to the inter-vehicle time matching the preference, as the target inter-vehicle distance after that. Consequently, even when the follow-up object vehicle accelerates or decelerates, the inter-vehicle distance between the follow-up object vehicle and the own vehicle is automatically adjusted such that the inter-vehicle time at the change request acceptance time point is kept.

In the above aspect, the information acquisition unit may be configured to acquire information about a vehicle speed of the own vehicle, as the traveling state relevant information; and the determination unit may be configured to determine that the traveling state is the specific state, when the follow-up inter-vehicle distance that is included in the traveling state relevant information is larger than a distance threshold, the distance threshold being larger as the vehicle speed of the own vehicle that is included in the traveling state relevant information is higher.

With the above configuration, the distance threshold is large in a state where the vehicle speed of the own vehicle is relatively high. When the inter-vehicle distance between the follow-up object vehicle and the own vehicle is smaller than the distance threshold in such a state, the determination unit in the aspect determines that the traveling state of the own vehicle at the current time point is not the specific state. On this occasion, the target traveling condition in adaptive cruise control is not changed even when the driver generates the condition change request using the request generation device. Consequently, with the above configuration, it is possible to prevent the target traveling condition in adaptive cruise control from being changed based on a state where the own vehicle is excessively close to the follow-up object vehicle. In other words, it is possible to prevent the execution of adaptive cruise control in which the inter-vehicle distance or inter-vehicle time is excessively small.

In the above aspect, the driving operation element may include a steering wheel by which a steering state of the own vehicle is changed; the information acquisition unit may be configured to acquire information about a first distance and a second distance as the traveling state relevant information, the first distance being a distance in a road width direction between a first mark line and the own vehicle, the first mark line being a road mark line on a left side in a region in front of the own vehicle, the second distance being a distance in the road width direction between a second mark line and the own vehicle, and the second mark line being a road mark line on a right side in the region in front of the own vehicle; the driving assist control unit may be configured to execute lane keeping control by using, as the target traveling condition, a condition that the own vehicle travels along a target traveling line, the target traveling line being set in a traveling lane that is specified by the first mark line and the second mark line; and the condition change unit may be configured to change the target traveling condition by changing the target traveling line based on at least one of the first distance and the second distance that are included in the traveling state relevant information at a change request acceptance time point, the change request acceptance time point being a time point when the condition change request is generated in the case where it is determined that the traveling state is the specific state.

With the above configuration, as the driving assist control, the driving assist control unit executes lane keeping control by which the own vehicle travels along the predetermined target traveling line set in the traveling lane. By operating the steering wheel, the driver can change the distances in the road width direction between the own vehicle and the first and second mark lines, in accordance with the preference, during the execution of lane keeping control. Then, when the driver generates the condition change request using the request generation device in the case where it is determined that the traveling state is the specific state, the target traveling line is changed based on at least one of the "first distance and second distance" at that time point (that is, the change request acceptance time point), so that the target traveling condition in lane keeping control is changed. Thus, with the above configuration, the driver can set the target traveling condition for lane keeping control that matches the driver's preference, during the execution of lane keeping control.

In the above aspect, the driving assist control unit may be configured to set, as the target traveling line, a line located a target lateral distance from a reference mark line, the reference mark line being at least one of the first mark line and the second mark line.

In the above aspect, the driving assist control unit may be configured to: set the first mark line as the reference mark line when the first distance is smaller than the second distance; and set the second mark line as the reference mark line when the second distance is smaller than the first distance.

In the above aspect, the condition change unit may be configured to: store, as the target lateral distance, the first distance that is included in the traveling state relevant information at the change request acceptance time point when the first mark line is set as the reference mark line; store, as the target lateral distance, the second distance that is included in the traveling state relevant information at the change request acceptance time point when the second mark line is set as the reference mark line; and change the target traveling condition by changing the target traveling line based on the target lateral distance which is stored.

With the above configuration, the condition change unit sets one of the first mark line and the second mark line, as the reference mark line, and sets the position that is the target lateral distance away from the reference mark line in the road width direction, as the target traveling line. The target lateral distance is the first distance or second distance at the change request acceptance time point. Consequently, the driving assist control unit in the aspect executes lane keeping control so as to keep the first distance or second distance at the change request acceptance time point. Therefore, with the above configuration, the driver adjusts the first distance and the second distance to distances matching the preference, by operating the steering wheel, and generates the condition change request at that time point. Thereby, the driver can set a line that is a "distance matching the preference" away from the reference mark line, as the target traveling line.

In the above aspect, the determination unit may be configured to determine that the traveling state is the specific state, when both of the first distance and the second distance that are included in the traveling state relevant information are equal to or larger than a predetermined distance threshold.

With the above configuration, the determination unit determines that the traveling state of the own vehicle at the current time point is not the specific state, in a state where the own vehicle is excessively close to one of the first and second mark lines (that is, when the smaller one of the first distance and the second distance is smaller than the predetermined distance threshold). On this occasion, the target traveling condition in lane keeping control is not changed even when the driver generates the condition change request using the request generation device. Consequently, with the above configuration, it is possible to prevent the target traveling condition in lane keeping control from being changed based on the state where the own vehicle is excessively close to one of the first and second mark lines. In other words, it is possible to prevent the execution of a lane keeping control in which the distance between the target traveling line and the reference mark line is excessively small.

Additional characteristics related to the invention will be shown by descriptions in the specification and the accompanying drawings. Other problems, configurations and effects will be shown by descriptions of the following embodiments.

However, constituent elements of the invention are not limited to the embodiments specified by names and/or reference characters that are used in the embodiments.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is a schematic block diagram of a driving assist device (first device) according to a first embodiment of the invention;

FIG. 2 is a graph (map) that is referred to by a CPU of the first device at the time of execution of an ACC;

FIG. 3A is a diagram showing inter-vehicle distances between an own vehicle and an ACC object vehicle at time t1 and time t2;

FIG. 3B is a diagram showing a relation between vehicle speeds of the own vehicle and the inter-vehicle distances at time t1 and time t2;

FIG. 4A is a diagram showing inter-vehicle distances between the own vehicle and the ACC object vehicle at time t1 and time t2';

FIG. 4B is a diagram showing a relation between vehicle speeds of the own vehicle and the inter-vehicle distances at time t1 and time t2';

FIG. 5A is a diagram showing inter-vehicle distances between the own vehicle and the ACC object vehicle at time t2 and time t3;

FIG. 5B is a diagram showing a relation between vehicle speeds of the own vehicle and the inter-vehicle distances at time t1, time t2 and time t3;

FIG. 6 is a flowchart showing an "ACC start/end determination routine" that is executed by the CPU of the first device;

FIG. 7 is a flowchart showing an "ACC execution routine" that is executed by the CPU of the first device;

FIG. 8 is a flowchart showing a "first specific state determination routine" that is executed by the CPU of the first device;

FIG. 9 is a flowchart showing an "ACC condition setting routine" that is executed by the CPU of the first device;

FIG. 10 is a flowchart showing an "ACC mode initialization routine" that is executed by the CPU of the first device;

FIG. 11A is a diagram relevant to a driving assist device (second device) according to a second embodiment of the invention, and is a diagram showing inter-vehicle distances between the own vehicle and the ACC object vehicle at time t1 and time t2;

FIG. 11B is a diagram relevant to the driving assist device (second device) according to the second embodiment of the invention, and is a diagram showing a relation between vehicle speeds of the own vehicle and the inter-vehicle distances at time t1 and time t2;

FIG. 12 is a flowchart showing an "ACC execution routine" that is executed by a CPU of the second device;

FIG. 13 is a flowchart showing an "ACC condition setting routine" that is executed by the CPU of the second device;

FIG. 14 is a schematic block diagram of a driving assist device (third device) according to a third embodiment of the invention;

FIG. 15 is a plan view for describing a lane keeping control based on a target traveling line set using a centerline of a traveling lane;

FIG. 16 is a plan view for describing a state when a CUP of the third device determines whether the traveling state of the own vehicle is a second specific state;

FIG. 17 is a flowchart showing a "LTC start/end determination routine" that is executed by the CPU of the third device;

FIG. 18 is a flowchart showing a "LTC execution routine" that is executed by the CPU of the third device;

FIG. 19 is a flowchart showing a "second specific state determination routine" that is executed by the CPU of the third device;

FIG. 20 is a flowchart showing a "LTC condition setting routine" that is executed by the CPU of the third device;

FIG. 21 is a flowchart showing a "LTC mode initialization routine" that is executed by the CPU of the third device;

FIG. 22 is a diagram for describing a modification when the CPU of the first device sets a target inter-vehicle distance in a second ACC mode, and is a diagram showing a relation between vehicle speeds of the own vehicle and inter-vehicle distances at time t1, time t2 and time t5; and

FIG. 23 is a plan view for describing a modification when the CPU of the third device sets a target traveling line in a second LTC mode.

DETAILED DESCRIPTION OF EMBODIMENTS

Hereinafter, driving assist devices according to embodiments of the invention will be described with reference to the drawings.

First Embodiment

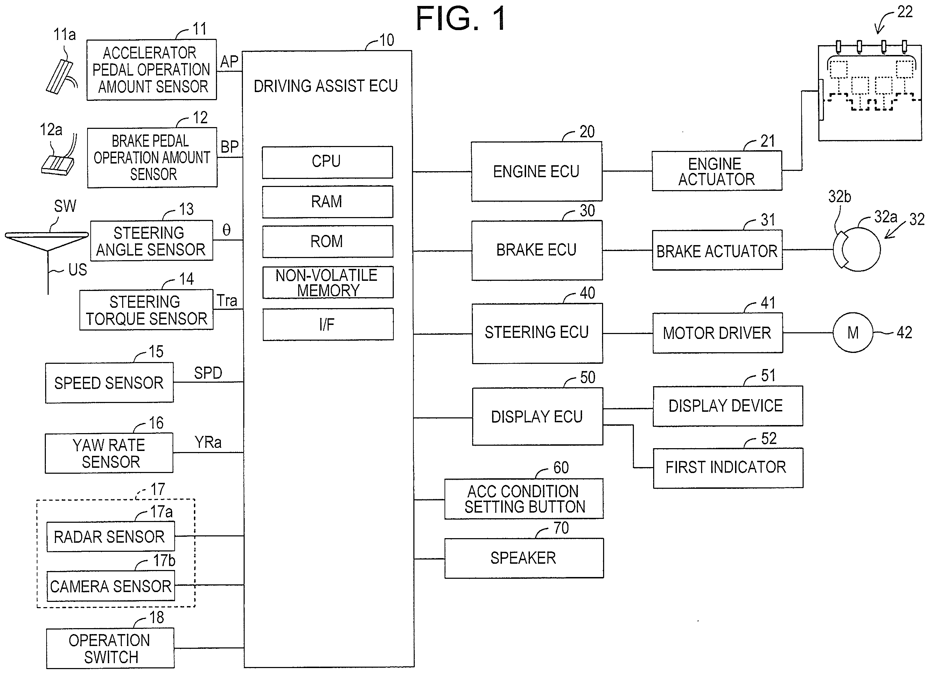

A driving assist device (hereinafter, also referred to as "first device") according to an embodiment of the invention is applied to a vehicle. The vehicle to which the driving assist device according to the embodiment of the invention is applied is also referred to as "own vehicle", for distinction from other vehicles. As shown in FIG. 1, the driving assist device includes a driving assist ECU 10, an engine ECU 20, a brake ECU 30, a steering ECU 40 and a display ECU 50.

The ECUs are electric control units each of which includes a microcomputer as a principal part, and are connected through an unillustrated controller area network (CAN) such that information can be mutually sent and received. In the specification, the microcomputer includes a CPU, a RAM, a ROM, a non-volatile memory, an interface (I/F), and the like. The CPU realizes various functions by executing instructions (programs or routines) stored in the ROM.

The driving assist ECU 10 is connected to sensors (including a switch) described below, and receives detection signals or output signals of the sensors. The sensors may be connected to ECUs other than the driving assist ECU 10. On that occasion, the driving assist ECU 10 receives the detection signals or output signals of the sensors from the ECUs to which the sensors are connected, through the CAN.

An accelerator pedal operation amount sensor 11 detects the operation amount (that is, the accelerator position) of an accelerator pedal (an accelerator operation element that is operated for accelerating the own vehicle) 11a, and outputs a signal indicating an accelerator pedal operation amount AP.

A brake pedal operation amount sensor 12 detects the operation amount of a brake pedal (a brake operation element that is operated for decelerating the own vehicle) 12a, and outputs a signal indicating a brake pedal operation amount BP.

A steering angle sensor 13 detects the steering angle of the own vehicle, and outputs a signal indicating a steering angle $\theta$. The value of the steering angle $\theta$ is a positive value when a steering wheel SW is rotated from a predetermined reference position (neutral position) in a first direction (leftward direction), and is a negative value when the steering wheel SW is rotated from the predetermined reference position in a second direction (rightward direction) opposite to the first direction. The neutral position is a reference position at which the steering angle $\theta$ is zero, and is the position of the steering wheel SW when the vehicle travels in a straight line. The steering wheel SW is a driving operation element that is operated by a driver for changing the steering state of the own vehicle.

A steering torque sensor 14 detects the steering torque that is applied to a steering shaft US of the own vehicle by the operation of the steering wheel SW, and outputs a signal indicating a steering torque Tra. The value of the steering torque Tra is a positive value when the steering wheel SW is rotated in the first direction (leftward direction), and is a negative value when the steering wheel SW is rotated in the second direction (rightward direction).

A speed sensor 15 detects the traveling speed (vehicle speed) of the own vehicle, and outputs a signal indicating a vehicle speed SPD.

A yaw rate sensor 16 detects the yaw rate of the own vehicle, and outputs an actual yaw rate YRa.

The "information indicating the driving state of the own vehicle" detected by the above-described sensors 11 to 16 is also referred to as "driving state information". The accelerator pedal 11a, the brake pedal 12a, the steering wheel SW and the like are driving operation elements that are operated by the driver for changing the driving state of the own vehicle.

A periphery sensor 17 is a sensor that detects the state of the periphery of the own vehicle. The periphery sensor 17 acquires information relevant to a road (for example, a traveling lane on which the own vehicle is traveling) in the periphery of the own vehicle and information relevant to a solid body that exists on the road. Examples of the solid body include moving bodies such as an automobile, a pedestrian and a bicycle, and fixed bodies such as a guardrail and a fence. Hereinafter, the solid body is also referred to as "physical object". The periphery sensor 17 includes a radar sensor 17a and a camera sensor 17b.

The radar sensor 17a radiates, for example, an electric wave (hereinafter, referred to as "millimeter wave") in a millimeter band, to a peripheral region of the own vehicle that contains at least a region in front of the own vehicle, and receives a millimeter wave reflected by the physical object that exists in the radiation range (that is, a reflected wave). Furthermore, using a relation between the sent millimeter wave and the received reflected wave, the radar sensor 17a determines whether there is a physical object, and computes parameters indicating a relative relation between the own vehicle and the physical object. The radar sensor 17a outputs the determination result and the computation result. The parameters indicating the relative relation between the own vehicle and the physical object includes the direction (or the position) of the physical object with respect to the own vehicle, the distance between the own vehicle and the physical object, the speed of the physical object relative to the own vehicle, and the like.

More specifically, the radar sensor 17a includes a millimeter-wave sending-receiving unit and a processing unit. The processing unit acquires the parameters indicating the relative relation between the own vehicle and the physical object, every predetermined time, based on the phase difference between the millimeter wave sent from the millimeter-wave sending-receiving unit and the reflected wave received by the millimeter-wave sending-receiving unit, the attenuation level of the reflected wave, the time from the sending of the millimeter wave to the receiving of the reflected wave, and the like. As described above, the parameters include "a distance (a longitudinal distance; an inter-vehicle distance if a detected physical object (n) is another vehicle) Dfx(n), a relative speed Vfx(n), a lateral distance Dfy(n), a relative lateral speed Vfy(n), and the like" with respect to the detected physical object (n).

The inter-vehicle distance Dfx(n) is the distance between the own vehicle and the physical object (n) (for example, a preceding vehicle) along a central axis of the own vehicle (a central axis extending in a front-rear direction). The relative speed Vfx(n) is the difference (= Vs - Vj) between a speed Vs of the physical object (n) (for example, a preceding vehicle) and a speed Vj of the own vehicle. The speed Vs of the physical object (n) is the speed of the physical object (n) in the traveling direction of the own vehicle. The lateral distance Dfy(n) is the distance of "a center position (for example, a vehicle-width-directional center position of the preceding vehicle) of the physical object (n)" from the central axis of the own vehicle in the direction orthogonal to the central axis of the own vehicle. The lateral distance Dfy(n) is also referred to as "lateral position". The relative lateral speed Vfy(n) is the speed of the center position (for example, a vehicle-width-directional center position of the preceding vehicle) of the physical object (n) in the direction orthogonal to the central axis of the own vehicle.

The camera sensor 17b includes a stereo camera and an image processing unit, and photographs views in a right-side region and left-side region in front of the vehicle, to acquire a pair of right and left image data. Based on the pair of right and left image data photographed, the camera sensor 17b determines whether there is a physical object, and computes the parameters indicating the relative relation between the own vehicle and the physical object. The camera sensor 17b outputs the determination result and the computation result. On this occasion, the driving assist ECU 10 determines the parameters indication the relative relation between the own vehicle and the physical object, by synthesizing the parameters indicating the relative relation between the own vehicle and the physical object obtained by the radar sensor 17a and the parameters indicating the relative relation between the own vehicle and the physical object obtained by the camera sensor 17b.

Furthermore, based on the pair of right and left image data photographed, the camera sensor 17b recognizes right and left mark lines of a road (a traveling lane on which the own vehicle is traveling), and calculates the form of the road (for example, the curvature of the road) and a positional relation between the road and the own vehicle (for example, the distance from the left edge or right edge of the traveling lane to a vehicle-width-directional center position of the own vehicle). Information relevant to a lane that includes the form of the road, the positional relation between the road and the own vehicle, and the like is referred to as "lane information". The camera sensor 17b outputs the calculated lane information to the driving assist ECU 10.

Information (including the parameters indicating the relative relation between the own vehicle and the physical object) relevant to the physical object that is acquired by the periphery sensor 17 is referred to as "physical object information". The periphery sensor 17 repeatedly sends the physical object information to the driving assist ECU 10, every predetermined sampling time. Information relevant to a situation in the periphery of the vehicle, which is information including the "physical object information and lane information", is referred to as "vehicle periphery information".

The periphery sensor 17 does not always need to include both the radar sensor and the camera sensor, and for example, may include only the radar sensor or only the camera sensor.

As described above, the driving assist ECU 10 acquires information including the "driving state information" and the "vehicle periphery information" and indicating the traveling state of the own vehicle, as "traveling state relevant information". Some or all of the sensors 11 to 17 are also referred to as "information acquisition units that acquire the traveling state relevant information".

An operation switch 18 is a switch that is operated by the driver. By operating the operation switch 18, the driver can select whether to execute adaptive cruise control. When the driver performs a predetermined operation using the operation switch 18, an ACC start request or an ACC end request (cancel request) is generated in response to the operation.

The engine ECU 20 is connected to an engine actuator 21. The engine actuator 21 includes a throttle valve actuator that changes the opening degree of a throttle valve of an internal combustion engine 22. The engine ECU 20 can change torque to be generated by the internal combustion engine 22, by driving the engine actuator 21. The torque to be generated by the internal combustion engine 22 is transmitted to unillustrated driving wheels through an unillustrated transmission. Consequently, by controlling the engine actuator 21, the engine ECU 20 can control the driving power of the own vehicle, and can change the accelerating state (acceleration). In the case where the vehicle is a hybrid vehicle, the engine ECU 20 can control the driving power of the vehicle that is generated by one or both of "an internal combustion engine and an electric motor" as vehicle driving sources. Furthermore, in the case where the vehicle is an electric vehicle, the engine ECU 20 can control the driving power of the vehicle that is generated by an electric motor as a vehicle driving source.

The brake ECU 30 is connected to a brake actuator 31. The brake actuator 31 is provided in an unillustrated hydraulic circuit including a master cylinder that pressurizes hydraulic oil with thread force on the brake pedal 12a and friction brake mechanisms 32 that are provided on a right-front wheel, a left-front wheel, a right-rear wheel and a left-rear wheel. The brake actuator 31 adjusts the hydraulic pressure that is supplied to a wheel cylinder built in a brake caliper 32b of each friction brake mechanism 32, in response to an instruction from the brake ECU 30. The wheel cylinder is actuated by the hydraulic pressure, and thereby, a brake pad is pressed onto a brake disk 32a, so that friction braking force is generated. Consequently, by controlling the brake actuator 31, the brake ECU 30 can control the braking force of the own vehicle, and can change the accelerating state (deceleration, that is, negative acceleration).

The steering ECU 40 is a control device for a known electric power steering system, and is connected to a motor driver 41. The motor driver 41 is connected to a steering motor 42. The steering motor 42 is incorporated in an "unillustrated steering mechanism including the steering wheel SW, the steering shaft US linked with the steering wheel SW, a steering gear mechanism and the like" of the vehicle. The steering motor 42 generates torque with electric power that is supplied from an unillustrated battery of the vehicle through the motor driver 41, and with this torque, the steering motor 42 can generate steering assist torque or can steer right and left steered wheels. That is, the steering motor 42 can change the rudder angle (steering angle) of the own vehicle.

The display ECU 50 is connected to a display device 51 and a first indicator 52. The display device 51 is a multi-information display that is provided just in front of a driver's seat. The display device 51 displays a variety of information, in addition to the display of measured values such as vehicle speed and engine speed. The display device 51 is not limited to the multi-information display. As the display device 51, a head-up display may be employed.

The first indicator 52 is a lamp that is provided at a position allowing the driver to visually recognize the lamp during driving (for example, on an instrument panel). The first indicator 52 gives, to the driver, a notice of whether the traveling state of the own vehicle at a certain time point is a state where a target traveling condition in adaptive cruise control is permitted to be changed (hereinafter, referred to as "first specific state" or "first specific situation"). The "target traveling condition in adaptive cruise control" in the embodiment is a condition that the own vehicle travels so as to follow an ACC object vehicle (follow-up object vehicle) described later while the inter-vehicle distance between the own vehicle and the ACC object vehicle is kept at a target inter-vehicle distance. It can be said that the first specific state is a state where a safe inter-vehicle distance can be kept between the own vehicle and the ACC object vehicle even when the inter-vehicle distance between the own vehicle and the ACC object vehicle at that time point is employed as the target inter-vehicle distance.

The display ECU 50 can turn on or turn off the first indicator 52, in response to an instruction from the driving assist ECU 10. The first indicator 52 is turned on when the traveling state of the own vehicle is the first specific state, and is turned off when the traveling state of the own vehicle is not the first specific state. Thus, the first indicator 52 functions as a notification device that notifies the driver of the result of the determination of whether the traveling state of the own vehicle is the first specific state. The first indicator 52 may be a display device that can display a predetermined message indicating "the traveling state at the current time is the first specific state" when the traveling state of the own vehicle is the first specific state.

An ACC condition setting button 60 is a button (or a switch) that is operated by the driver. When the driver depresses (or operates) the ACC condition setting button 60, the ACC condition setting button 60 outputs a request signal for requesting the change in the target traveling condition in adaptive cruise control, to the driving assist ECU 10. That is, when the driver depresses the ACC condition setting button 60, the ACC condition change request (a setting request for the ACC condition) is generated.

When a speaker 70 receives a speech generation command from the driving assist ECU 10, the speaker 70 generates a voice corresponding to the speech generation command.

Adaptive Cruise Control (ACC)

Next, adaptive cruise control (ACC) will be described. Adaptive cruise control is executed by the driving assist ECU 10, as a driving assist control.

Adaptive cruise control is control by which the own vehicle automatically follows a preceding vehicle (ACC object vehicle) while the inter-vehicle distance between the preceding vehicle and the own vehicle is kept at a predetermined target inter-vehicle distance, based on the physical object information. The preceding vehicle is another vehicle that travels immediately ahead of the own vehicle in a region in front of the own vehicle. Except that it is possible to change the target inter-vehicle distance that specifies the target traveling condition in adaptive cruise control, adaptive cruise control itself is known (see Japanese Patent Application Publication No. 2014-148293, Japanese Patent Application Publication No. 2006-315491, Japanese Patent No. 4172434, and Japanese Patent No. 4929777, for example). Hereinafter, adaptive cruise control is referred to as merely "ACC".

The driving assist ECU 10 executes the ACC when the ACC is requested by the operation of the operation switch 18.

More specifically, when the ACC is requested, the driving assist ECU 10 selects the ACC object vehicle based on the physical object information acquired by the periphery sensor 17. For example, the driving assist ECU 10 determines the relative position of the detected physical object (n) that is specified by the lateral distance Dfy(n) and inter-vehicle distance Dfx(n) of the physical object (n) is in a follow-up object vehicle area. The follow-up object vehicle area is an area that is previously set such that the absolute value of the distance in the lateral direction with respect to the traveling direction of the own vehicle is smaller as the distance in the traveling direction of the own vehicle is longer. The distance in the traveling direction of the own vehicle is estimated based on the vehicle speed of the own vehicle and the yaw rate of the own vehicle. Then, in the case where the relative position of the physical object (n) is in the follow-up object vehicle area for a predetermined time or more, the driving assist ECU 10 selects the physical object (n) as the ACC object vehicle. In the case where the relative positions of a plurality of physical objects are in the follow-up object vehicle area for the predetermined time or more, the driving assist ECU 10 selects, as the ACC object vehicle, a physical object having the minimum inter-vehicle distance Dfx(n), from the physical objects.

Furthermore, the driving assist ECU 10 calculates a target acceleration Gtgt, in accordance with one of Expression (1) and Expression (2) described below. In Expression (1) and Expression (2), Vfx(a) is the relative speed of the ACC object vehicle (a), k1 and k2 are predetermined positive gains (coefficients), and ΔD1 is an inter-vehicle deviation that is obtained by subtracting a "target inter-vehicle distance Dtg" from a "inter-vehicle distance Dfx(a) of the ACC object vehicle (a)". A decision method for the target inter-vehicle distance Dtg will be described later in detail.

In the case where a value (k1 · ΔD1 + k2 · Vfx(a)) is a positive value or "0", the driving assist ECU 10 decides the target acceleration Gtgt using the following Expression (1). Here, ka1 is a positive gain (coefficient) for acceleration, and is set to a value equal to or less than "1". In the case where the value (k1 · ΔD1 + k2 · Vfx(a)) is a negative value, the driving assist ECU 10 decides the target acceleration Gtgt using the following Expression (2). Here, kd1 is a positive gain (coefficient) for deceleration, and is set to "1" in the embodiment.

$$\text{Gtgt (for acceleration)} = \text{ka1} \cdot (\text{k1} \cdot \Delta D1 + \text{k2} \cdot \text{Vfx(a)}) \ ... \ (1)$$

$$\text{Gtgt (for deceleration)} = \text{kd1} \cdot (\text{k1} \cdot \Delta D1 + \text{k2} \cdot \text{Vfx(a)}) \ ... \ (2)$$

In the case where there is no physical object in the follow-up object vehicle area, the driving assist ECU 10 decides the target acceleration Gtgt based on a "target speed that is set depending on a predetermined target inter-vehicle time (which may be the same as Tdef described later)" and the vehicle speed SPD of the own vehicle, such that the vehicle speed SPD coincides with the target speed.

The driving assist ECU 10 controls the engine actuator 21 using the engine ECU 20, and as necessary, controls the brake actuator 31 using the brake ECU 30, such that the acceleration of the vehicle coincides with the target acceleration Gtgt.

In the embodiment, the driving assist ECU 10 executes the ACC in one of a first ACC mode and a second ACC mode. The modes will be described below.

First ACC Mode

The first ACC mode is a mode in which the own vehicle follows the ACC object vehicle using a target inter-vehicle distance Dtgt1 calculated in accordance with the following Expression (3), as the above-described target inter-vehicle distance Dtg. In Expression (3), Tdef is a target inter-vehicle time that is previously set, SPD is the vehicle speed of the own vehicle, and $\alpha$ is a predetermined constant ($\geq 0$).

$$\mathrm{Dtgt1} = \mathrm{Tdef} \times \mathrm{SPD} + \alpha \ \dots \ (3)$$

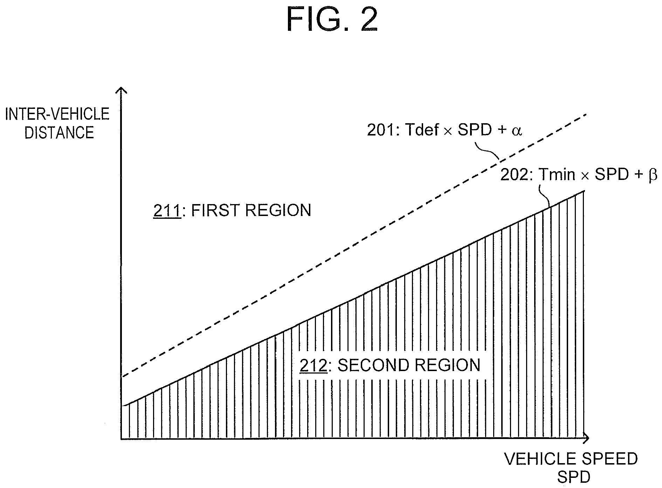

In the ROM of the driving assist ECU 10, a target inter-vehicle distance setting graph 201 shown in FIG. 2 is stored as a map. In FIG. 2, the abscissa axis indicates the vehicle speed SPD of the own vehicle 100, and the ordinate axis indicates the inter-vehicle distance between the own vehicle and the ACC object vehicle (hereinafter, also referred to as merely "inter-vehicle distance") or the target value of the inter-vehicle distance (that is, the target inter-vehicle distance).

The target inter-vehicle distance setting graph 201 corresponds to Expression (3) described above. During the execution of the ACC, the driving assist ECU 10 decides the target inter-vehicle distance Dtgt1 using the target inter-vehicle distance setting graph 201 and the actual vehicle speed SPD. The driving assist ECU 10 calculates the inter-vehicle deviation $\Delta$D1 (= Dfx(a) - Dtgt1) by subtracting the "target inter-vehicle distance Dtgtl" from the "inter-vehicle distance Dfx(a) of the ACC object vehicle (a)". Then, the driving assist ECU 10 calculates the target acceleration Gtgt in accordance with one of Expression (1) and Expression (2).

Second ACC Mode

The second ACC mode is a mode in which the own vehicle follows the ACC object vehicle using a target inter-vehicle distance Dtgt2 set by the driver, as the above-described target inter-vehicle distance Dtg. The target inter-vehicle distance Dtgt2 is set (decided) based on the following technique.

In the ROM of the driving assist ECU 10, a first specific state determination graph 202 shown in FIG. 2 is stored as a map. The first specific state determination graph 202 is a graph for determining whether the traveling state of the own vehicle is the first specific state during the execution of the ACC. The first specific state determination graph 202 is defined by the following Expression (4). Tmin is a minimum inter-vehicle time that is previously set, and is an inter-vehicle time that should be secured at minimum between the own vehicle and the ACC object vehicle. Tmin is a time that is shorter than Tdef. $\beta$ is a predetermined constant ($\alpha > \beta \geq 0$). Here, $\beta$ may be the same value as $\alpha$ in Expression (3). The inter-vehicle distance evaluated by the following Expression (4) is used as a threshold for determining whether the driving state of the own vehicle is the first specific state. The threshold is larger as the vehicle speed SPD of the own vehicle is higher.

$$\text{Inter-Vehicle Distance} = \mathrm{Tmin} \times \mathrm{SPD} + \beta \ \dots \ (4)$$

A region on the upper side of the straight line of the first specific state determination graph 202 is specified as a "first region 211". During the execution of the ACC, the driving assist ECU 10 determines that the driving state of the own vehicle is the first specific state, in the case where the point (the actual traveling state) specified by the vehicle speed SPD of the own vehicle and the inter-vehicle distance Dfx(a) is in the first region 211 (in the case where the above point is on the upper side of the straight line of the first specific state determination graph 202). In the case where the traveling state of the own vehicle is the first specific state, the driving assist ECU 10 turns on the first indicator 52 through the display ECU 50. Consequently, the driver can recognize that the inter-vehicle distance Dfx(a) at the current time can be set as the target inter-vehicle distance Dtgt2.

A region on the lower side of the straight line of the first specific state determination graph 202 is specified as a "second region 212". During the execution of the ACC, the driving assist ECU 10 determines that the traveling state of the own vehicle is not the first specific state, in the case where the point (the actual traveling state) specified by the vehicle speed SPD of the own vehicle at the current time and the inter-vehicle distance Dfx(a) at the current time is in the second region 212 (including a case where the above point is on the straight line of the first specific state determination graph 202). In this case, the driving assist ECU 10 turns off the first indicator 52 through the display ECU 50. Consequently, the driver can recognize that the inter-vehicle distance Dfx(a) at the current time cannot be set as the target inter-vehicle distance Dtgt2. Furthermore, the driver can also recognize that the own vehicle is too close to the ACC object vehicle.

When the driver depresses the ACC condition setting button 60 in the first specific state (that is, in the state where the first indicator 52 is on), the driving assist ECU 10 accepts the ACC condition change request generated by the depression. The time point when the ACC condition change request is accepted by the driving assist ECU 10 is also referred to as "change request acceptance time point" or a "change request acceptance time point for the ACC".

When the driving assist ECU 10 accepts the ACC condition change request, the driving assist ECU 10 acquires the inter-vehicle distance Dfx(a) of the ACC object vehicle, from the physical object information acquired by the periphery sensor 17 at the change request acceptance time point for the ACC, and stores the inter-vehicle distance Dfx(a) in the RAM as the target inter-vehicle distance Dtgt2 for the second ACC mode. Then, the driving assist ECU 10 transitions the mode of the ACC from the first ACC mode to the second ACC mode. The driving assist ECU 10 calculates the inter-vehicle deviation $\Delta D1$, by subtracting the stored "target inter-vehicle distance Dtgt2" from the "inter-vehicle distance Dfx(a) of the ACC object vehicle (a)" after that. Then, the driving assist ECU 10 calculates the target acceleration Gtgt in accordance with one of Expression (1) and Expression (2). As described above, the driving assist ECU 10 changes the target traveling condition in the ACC, based on the traveling state relevant information (in this case, the inter-vehicle distance Dfx(a) included in the physical object information) at the change request acceptance time point, and executes the ACC such that the changed target traveling condition is met.

Behaviors during ACC

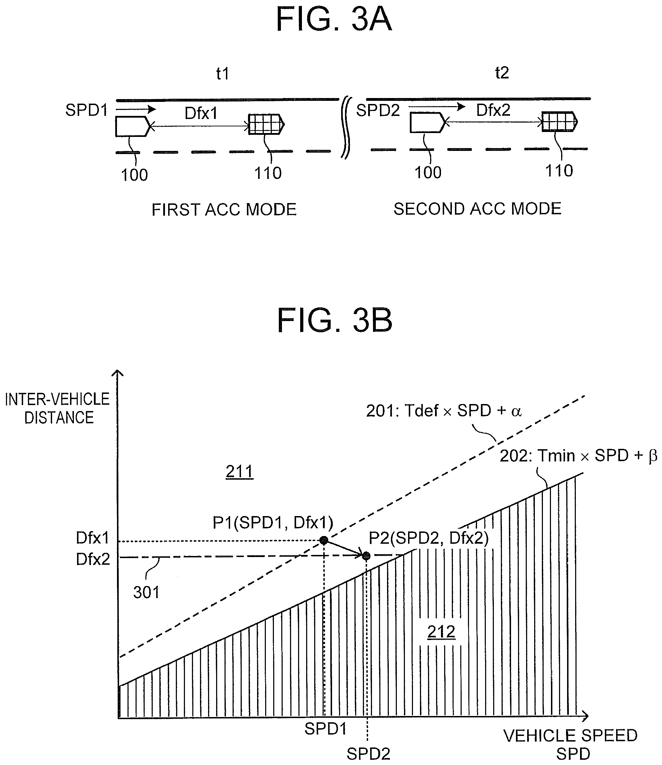

Next, behaviors of the driving assist ECU 10 during the execution of the ACC will be described with case 1 to case 3 shown in FIGS. 3A to 5B.

Case 1

In case 1, as shown on the left side of FIG. 3A, at time t1, the driving assist ECU 10 is executing the ACC in the first ACC mode. At this time, the vehicle speed of the own vehicle 100 is SPD1, and the inter-vehicle distance Dfx(a) between the own vehicle 100 and the ACC object vehicle 110 is Dfx1. Since the mode of the ACC is the first ACC mode, a point P1 specified by the vehicle speed SPD1 of the own vehicle 100 and the inter-vehicle distance Dfx1 is on the target inter-vehicle distance setting graph 201, as shown in FIG. 3B. Furthermore, the point P1 is in the first region 211. That is, the traveling state of the own vehicle 100 at time t1 is the first specific state. Consequently, the first indicator 52 is on.

In this state, the driver operates the accelerator pedal 11a as the driving operation element, and adjusts and changes the inter-vehicle distance between the own vehicle 100 and the ACC object vehicle 110. While the driver is operating the accelerator pedal 11a, the ACC is suspended. As a result, as shown on the right side of FIG. 3A, at time t2 when a predetermined time has elapsed since time t1, the inter-vehicle distance Dfx(a) is an inter-vehicle distance Dfx2 that is shorter than the inter-vehicle distance Dfx1 at time t1. Furthermore, the vehicle speed of the own vehicle 100 at time t2 is SPD2 (> SPD1). On this occasion, as shown in FIG. 3B, the point specified by the vehicle speed of the own vehicle 100 and the inter-vehicle distance changes from the point P1 to a point P2. In this example, the point P2 is in the first region 211. That is, the driving state of the own vehicle 100 at time t2 is the first specific state. Consequently, the first indicator 52 is still on.

In case 1, at time t2, the driver depresses the ACC condition setting button 60. By the depression, the ACC condition change request is generated. Since the driving state of the own vehicle 100 is the first specific state at this time, the ACC condition change request is accepted. Then, the driving assist ECU 10 stores, in the RAM, the inter-vehicle distance Dfx2 at the time point when the ACC condition change request is accepted (at the change request acceptance time point), as the target inter-vehicle distance Dtgt2 for the second ACC mode. Furthermore, the driving assist ECU 10 transitions the mode of the ACC from the first ACC mode to the second ACC mode. Consequently, after that, the driving assist ECU 10 executes the ACC in the second ACC mode, so as to keep the target inter-vehicle distance Dtgt2 (= Dfx2) which is set based on the operation of the driver. That is, the driving assist ECU 10 executes the ACC, such that the point specified by the vehicle speed SPD of the own vehicle 100 and the inter-vehicle distance in FIG. 3B is on a straight line (chain line) 301 indicating the inter-vehicle distance Dfx2. A case where the point specified by the vehicle speed SPD and the inter-vehicle distance enters the second region 212 after that will be described in case 3.

Case 2

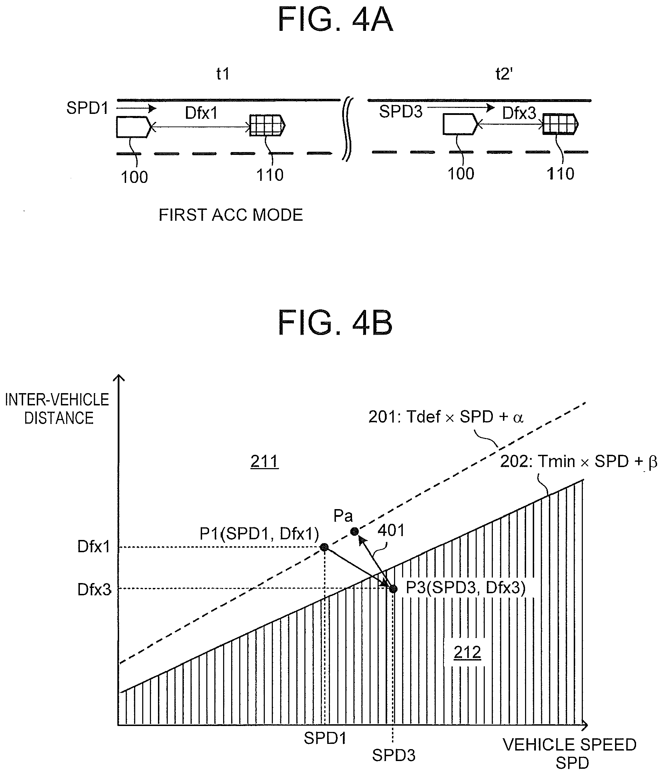

In case 2, as shown on the left side of FIG. 4A, at time t1, the driving assist ECU 10 is executing the ACC in the first ACC mode. The state at time t1 is the same as that in the above-described case 1, and therefore, the description is omitted.

After time t1, by operating the accelerator pedal 11a, the driver adjusts and changes the inter-vehicle distance between the own vehicle 100 and the ACC object vehicle 110. While the driver is operating the accelerator pedal 11a, the ACC is suspended. As shown on the right side of FIG. 4A, at time t2' when a predetermined time has elapsed since time t1, the inter-vehicle distance Dfx(a) is an inter-vehicle distance Dfx3 that is shorter than the inter-vehicle distance Dfx1 at time t1. Furthermore, the vehicle speed of the own vehicle 100 at time t2' is SPD3 (> SPD1). On this occasion, as shown in FIG. 4B, the point specified by the vehicle speed of the own vehicle 100 and the inter-vehicle distance changes from the point P1 to a point P3. In this example, the point P3 is in the second region 212. That is, the traveling state of the own vehicle 100 at time t2' is not the first specific state. Consequently, at time t2', the first indicator 52 is off. Therefore, at time t2', the driver can recognize that the inter-vehicle distance Dfx3 at the current time cannot be set as the target inter-vehicle distance Dtgt2 in the second ACC mode.

Even when the ACC condition setting button 60 is depressed in this state, the driving assist ECU 10 does not accept the ACC condition change request generated by the depression. Thus, in the case where the point specified by the vehicle speed of the own vehicle 100 and the inter-vehicle distance is in the second region 212, the driving assist ECU 10 does not change the target traveling condition in the ACC. Consequently, it is possible to prevent the target traveling condition in the ACC from being changed in a state where the own vehicle 100 is excessively close to the ACC object vehicle 110. In other words, it is possible to prevent the changed target inter-vehicle distance from being excessively small.

When the driver stops the operation of the accelerator pedal 11a (that is, when the driver takes the foot off the accelerator pedal 11a), the driving assist ECU 10 restarts the ACC in the first ACC mode. Consequently, as shown by an arrow 401 in FIG. 4B, the driving assist ECU 10 executes the ACC in the first ACC mode, such that the point specified by the vehicle speed of the own vehicle 100 and the inter-vehicle distance is on the target inter-vehicle distance setting graph 201 (see a point Pa).

Case 3

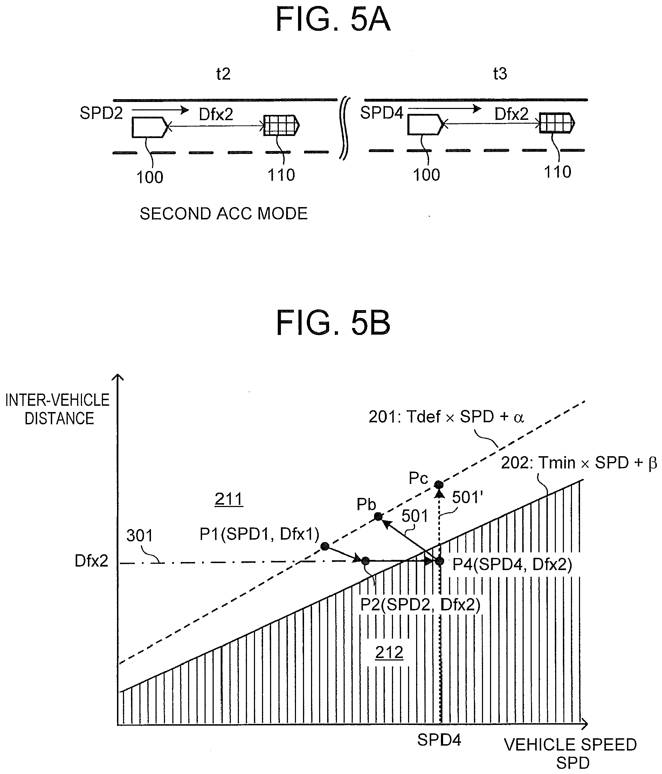

In case 3, as shown on the left side of FIG. 5A, at time t2, the driving assist ECU 10 is executing the ACC in the second ACC mode. The state before time t2 is the same as that in the above-described case 1, and therefore, the description is omitted.

In case 3, after time t2, the vehicle speed of the ACC object vehicle 110 gradually increases. Since the driving assist ECU 10 is executing the ACC in the second ACC mode, the driving assist ECU 10 accelerates the own vehicle 100 so as to keep the target inter-vehicle distance Dtgt2 (= Dfx2).

As shown on the right side of FIG. 5A, at time t3 when a predetermined time has elapsed since time t2, the inter-vehicle distance is Dfx2. Furthermore, the vehicle speed of the own vehicle 100 at time t3 is SPD4 (> SPD2). At this time, as shown in FIG. 5B, a point P4 specified by the vehicle speed SPD4 of the own vehicle and the inter-vehicle distance Dfx2 is in the second region 212. This state is a state where the minimum inter-vehicle time Tmin is not secured between the own vehicle 100 and the ACC object vehicle 110. Consequently, the driving assist ECU 10 transitions the mode of the ACC from the second ACC mode to the first ACC mode. Actually, the driving assist ECU 10 transitions the mode of the ACC from the second ACC mode to the first ACC mode, at the time point when the point specified by the vehicle speed SPD of the own vehicle and the inter-vehicle distance Dfx(a) crosses the first specific state determination graph 202.

At time t3, the driving assist ECU 10 displays, on the display device 51, a message for a notice of the transition of the mode of the ACC from the second ACC mode to the first ACC mode, and causes the speaker 70 to speak the message. Thereafter, as shown by an arrow 501 in FIG. 5B, the driving assist ECU 10 executes the ACC in the first ACC mode, such that the point specified by the vehicle speed SPD of the own vehicle 100 and the inter-vehicle distance is on the target inter-vehicle distance setting graph 201 (see a point Pb). In the case where the ACC object vehicle continues to accelerate at a sufficient acceleration even after time t3, the own vehicle 100 keeps the vehicle speed SPD4 at time t3, and as a result, the inter-vehicle distance reaches an inter-vehicle distance on the target inter-vehicle distance setting graph 201 (see a point Pc and a dashed arrow 501').

Concrete Behaviors

Next, concrete behaviors of the CPU of the driving assist ECU 10 (also referred to as merely "CPU") will be described. Routines described below are routines when the CPU executes the "control by which the own vehicle follows the ACC object vehicle" as a form of the ACC.

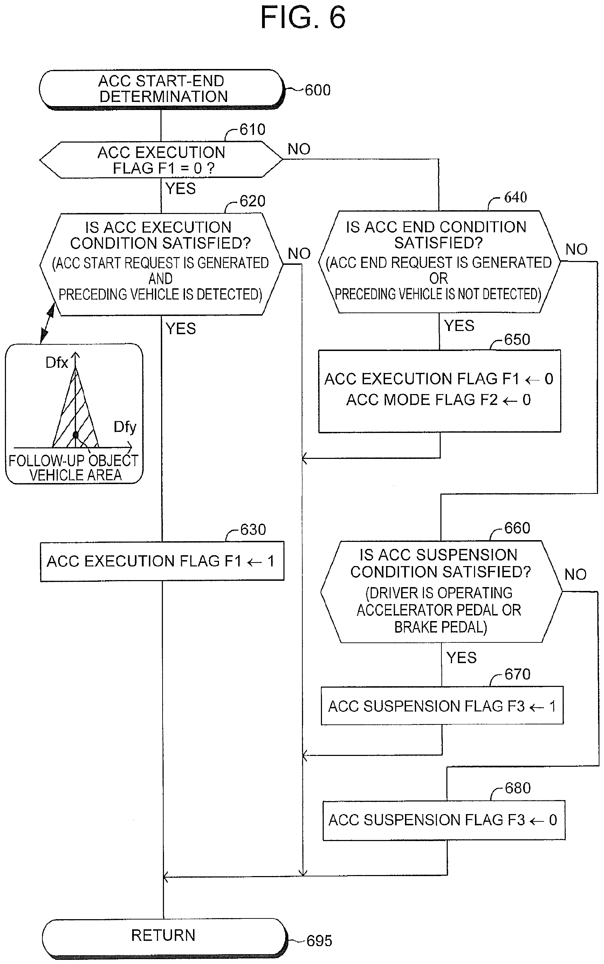

The CPU executes an "ACC start/end determination routine" shown by a flowchart in FIG. 6, every predetermined time. By executing an unillustrated routine every predetermined time, the CPU acquires the traveling state relevant information including the vehicle periphery information and the driving state information, from the sensors 11 to 17, and stores the traveling state relevant information in the RAM.

At a predetermined timing, the CPU starts the routine in FIG. 6, from step 600. The CPU proceeds to step 610, and determines whether an ACC execution flag F1 is "0". The ACC execution flag F1 indicates that the ACC is being executed when the value of the ACC execution flag F1 is "1", and indicates that the ACC is not being executed when the value of the ACC execution flag F1 is "0". The value of the ACC execution flag F1 (and the values of various flags described later) is set to "0", in an initialization routine that is executed by the CPU when an unillustrated ignition switch is switched from an OFF-position to an ON-position. Furthermore, the value of the ACC execution flag F1 is set to "0" also in step 650 described later.

If the value of the ACC execution flag F1 is "0" (the ACC is not being executed), the CPU makes the determination of "Yes" in step 610. The CPU proceeds to step 620, and determines whether a predetermined ACC execution condition (an execution condition for adaptive cruise control) is satisfied.

The ACC execution condition is satisfied when both of the following condition 1 and condition 2 are satisfied. Incidentally, a further different condition (for example, a condition that the vehicle speed SPD is equal to or higher than an ACC permission vehicle speed) may be added as a condition required for the satisfaction of the ACC execution condition. The same goes for the other conditions described in the specification.

> (Condition 1): The ACC start request is generated by the operation of the operation switch 18.
> (Condition 2): The preceding vehicle (physical object) is detected in the follow-up object vehicle area by the periphery sensor 17.

In the case where the ACC execution condition is not satisfied, the CPU makes the determination of "No" in step 620. The CPU proceeds directly to step 695, and ends the routine once.

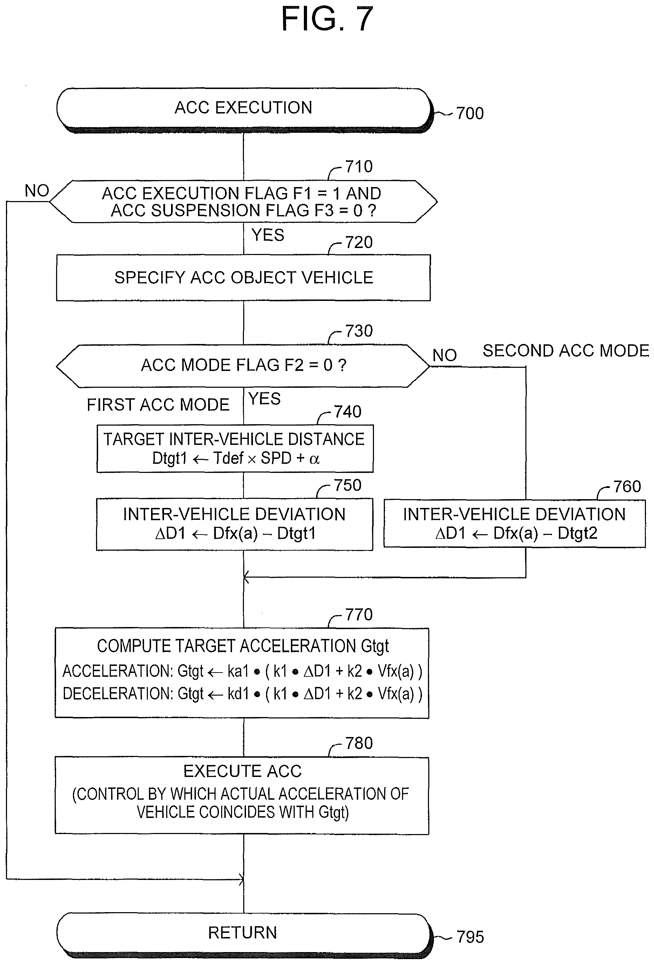

Meanwhile, in the case where the ACC execution condition is satisfied, the CPU makes the determination of "Yes" in step 620, and proceeds to step 630. The CPU sets the ACC execution flag F1 to "1" in step 630. The CPU proceeds to step 695, and ends the routine once. As a result, unless an ACC suspension condition described later is satisfied, the ACC is executed (see the determination of "Yes" in step 710 of FIG. 7).

On the other hand, in the case where the value of the ACC execution flag F1 is "1" (the ACC is being executed) at the time point when the CPU executes the process of step 610, the CPU makes the determination of "No" in step 610. The CPU proceeds to step 640, and determines whether a predetermined ACC end condition (an end condition for adaptive cruise control) is satisfied.

The ACC end condition is satisfied when at least one of the following condition 3 and condition 4 is satisfied.

> (Condition 3): The ACC end request is generated by the operation of the operation switch 18.
> (Condition 4): The preceding vehicle (physical object) is not detected in the follow-up object vehicle area by the periphery sensor 17.

In the case where the ACC end condition is satisfied, the CPU makes the determination of "Yes" in step 640. The CPU proceeds to step 650, and sets both of the ACC execution flag F1 and an ACC mode flag F2 to "0". The ACC mode flag F2 indicates that the mode of the ACC is the first ACC mode when the value of the ACC mode flag F2 is "0", and indicates that the mode of the ACC is the second ACC mode when the value of the ACC mode flag F2 is "1". Thereafter, the CPU proceeds to step 695, and ends the routine once. As a result, the ACC is stopped (see the determination of "No" in step 710 of FIG. 7).

Meanwhile, in the case where the ACC end condition is not satisfied at the time point when the CPU executes the process of step 640, the CPU makes the determination of "No" in step 640. The CPU proceeds to step 660, and determines whether a predetermined ACC suspension condition (a suspension condition for adaptive cruise control) is satisfied. The ACC suspension condition is satisfied when the driver operates at least one of the accelerator pedal 11a and the brake pedal 12a. The CPU determines whether the driver is operating the accelerator pedal 11a, based on the signal indicating the accelerator pedal operation amount AP from the accelerator pedal operation amount sensor 11. Further, the CPU determines whether the driver is operating the brake pedal 12a, based on the signal indicating the brake pedal operation amount BP from the brake pedal operation amount sensor 12.

In step 660, the CPU may determine whether an unillustrated accelerator switch is generating an ON-signal. The accelerator switch generates the ON-signal when the accelerator pedal 11a is operated. In this configuration, in the case where the accelerator switch is generating the ON-signal, the CPU determines that the driver is operating the accelerator pedal 11a. Further, in step 660, the CPU may determine whether an unillustrated brake switch is generating an ON-signal. The brake switch generates the ON-signal when the brake pedal 12a is operated. In this configuration, in the case where the brake switch is generating the ON-signal, the CPU determines that the driver is operating the brake pedal 12a.

In the case where the ACC suspension condition is satisfied, the CPU makes the determination of "Yes" in step 660. The CPU proceeds to step 670, and sets the ACC suspension flag F3 to "1". The ACC suspension flag F3 indicates that the ACC is suspended when the value of the ACC suspension flag F3 is "1", and indicates that the ACC is not suspended when the value of the ACC suspension flag F3 is "0". Thereafter, the CPU proceeds directly to step 695, and ends the routine once. As a result, the ACC is suspended (see the determination of "No" in step 710 of FIG. 7).

On the other hand, in the case where the ACC suspension condition is not satisfied, the CPU makes the determination of "No" in step 660. The CPU proceeds to step 680, and sets the ACC suspension flag F3 to "0". Thereafter, the CPU proceeds directly to step 695, and ends the routine once.

Furthermore, the CPU executes an "ACC execution routine" shown by a flowchart in FIG. 7, every predetermined time. At a predetermined timing, the CPU starts the process from step 700 of FIG. 7. The CPU proceeds to step 710, and determines whether the value of the ACC execution flag F1 is "1" and the value of the ACC suspension flag F3 is "0".

In the case where the value of the ACC execution flag F1 is "0" or the value of the ACC suspension flag F3 is "1", the CPU makes the determination of "No" in step 710. The CPU proceeds directly to step 795, and ends the routine once. As a result, the ACC is not executed.

Meanwhile, in the case where the value of the ACC execution flag F1 is "1" and the value of the ACC suspension flag F3 is "0", the CPU makes the determination of "Yes" in step 710, and proceeds to step 720. In step 720, the CPU specifies the preceding vehicle that exists in the follow-up object vehicle area, as the ACC object vehicle. In the case where a plurality of preceding vehicles exists in the follow-up object vehicle area, the CPU specifies, as the ACC object vehicle, a preceding vehicle having the minimum inter-vehicle distance Dfx(n), from the plurality of preceding vehicles.

Next, the CPU proceeds to step 730, and determines whether the value of the ACC mode flag F2 is "0". In the case where the value of the ACC mode flag F2 is "0", the CPU makes the determination of "Yes" in step 730, and sequentially performs the processes of "step 740, step 750, step 770 and step 780" described below. That is, the CPU executes the ACC in the first ACC mode. Thereafter, the CPU proceeds to step 795, and ends the routine once.

Step 740: The CPU determines the target inter-vehicle distance Dtgtl, using the target inter-vehicle distance setting graph 201 (that is, in accordance with Expression (3)).

Step 750: The CPU calculates the inter-vehicle deviation ΔD1 by subtracting the target inter-vehicle distance Dtgt1 from the inter-vehicle distance Dfx(a) of the ACC object vehicle (a) specified in step 720.

Step 770: The CPU calculates the target acceleration Gtgt in accordance with one of Expression (1) and Expression (2).

Step 780: The CPU sends the target acceleration Gtgt to the engine ECU 20 and the brake ECU 30, for causing the actual acceleration of the own vehicle to coincide with the target acceleration Gtgt. The engine ECU 20 controls (drives) the engine actuator 21, depending on the target acceleration Gtgt and the actual acceleration of the own vehicle. As necessary, the brake ECU 30 controls (drives) the brake actuator 31, depending on the target acceleration Gtgt and the actual acceleration of the own vehicle. As a result, the actual acceleration of the own vehicle coincides with the target acceleration Gtgt.

On the other hand, in the case where the value of the ACC mode flag F2 is "1" at the time point when the CPU proceeds to step 730, the CPU makes the determination of "No" in step 730, and sequentially performs the process of step 760 described below and the processes of "step 770 and step 780" described above. That is, the CPU executes the ACC in the second ACC mode. Thereafter, the CPU proceeds to step 795, and ends the routine once.

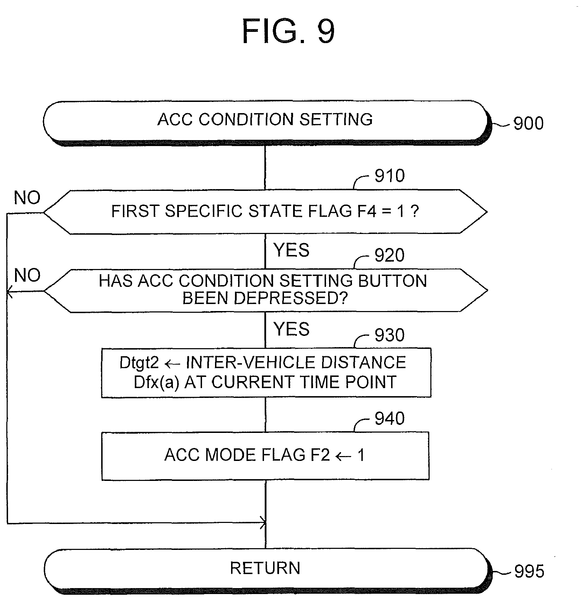

Step 760: The CPU reads the target inter-vehicle distance Dtgt2 (the target inter-vehicle distance for the second ACC mode) stored in the RAM, in step 930 of FIG. 9 described later. Then, the CPU calculates the inter-vehicle deviation ΔD1 by subtracting the target inter-vehicle distance Dtgt2 from the inter-vehicle distance Dfx(a) of the ACC object vehicle (a) specified in step 720. Thereafter, the CPU executes the processes of step 770 and step 780, in the above-described way.

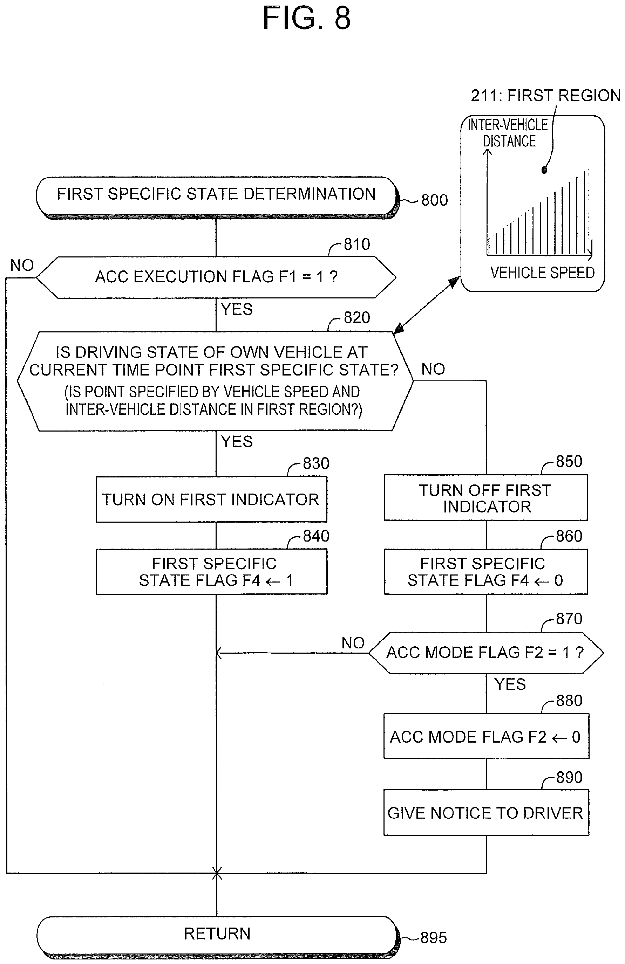

Furthermore, the CPU executes a "first specific state determination routine" shown by a flowchart in FIG. 8, every predetermined time. At a predetermined timing, the CPU starts the process from step 800 of FIG. 8. The CPU proceeds to step 810, and determines whether the value of the ACC execution flag F1 is "1".

In the case where the value of the ACC execution flag F1 is not "1", the CPU makes the determination of "No" in step 810. The CPU proceeds directly to step 895, and ends the routine once.

Meanwhile, in the case where the value of the ACC execution flag F1 is "1", the CPU makes the determination of "Yes" in step 810. The CPU proceeds to step 820, and determines whether the driving state of the own vehicle at the current time is the first specific state, based on the traveling state relevant information. Specifically, the CPU determines whether the point specified by the vehicle speed SPD of the own vehicle at the current time point and the inter-vehicle distance Dfx(a) at the current time point is in the first region 211 shown in FIG. 2.

Suppose that the point specified by the vehicle speed SPD of the own vehicle at the current time point and the

14

inter-vehicle distance Dfx(a) at the current time point is in the first region 211. In this case, the CPU makes the determination of "Yes" in step 820, and sequentially performs the processes of "step 830 and step 840" described below. Thereafter, the CPU proceeds directly to step 895, and ends the routine once.

Step 830: The CPU turns on the first indicator 52 using the display ECU 50.

Step 840: The CPU sets the value of the first specific state flag F4 to "1". The first specific state flag F4 indicates that the driving state of the own vehicle is the first specific state when the value of the first specific state flag F4 is "1", and indicates that the driving state of the own vehicle is not the first specific state when the value of the first specific state flag F4 is "0".

On the other hand, in the case where the point specified by the vehicle speed SPD of the own vehicle at the current time point and the inter-vehicle distance Dfx(a) at the current time point is not in the first region 211 (that is, the point is in the second region 212 shown in FIG. 2) at the time point when the CPU proceeds to step 820, the CPU makes the determination of "No" in step 820, and sequentially performs the processes of "step 850 and step 860" described below. Thereafter, the CPU proceeds to step 870.

Step 850: The CPU turns off the first indicator 52 using the display ECU 50.

Step 860: The CPU sets the value of the first specific state flag F4 to "0".

When the CPU proceeds to step 870, the CPU determines whether the value of the ACC mode flag F2 is "1". That is, the CPU determines whether the mode of the ACC is the second ACC mode (see step 940 described later).

In the case where the value of the ACC mode flag F2 is not "1", the CPU makes the determination of "No" in step 870. The CPU proceeds directly to step 895, and ends the routine once.

Suppose that the point specified by the vehicle speed SPD of the own vehicle at the current time point and the inter-vehicle distance Dfx(a) at the current time point moves into the second region 212 while the CPU is executing the ACC in the second ACC mode as described with reference FIGS. 5A and 5B. When the CPU proceeds to step 870 in this state, the CPU makes the determination of "Yes" in step 870 because the value of the ACC mode flag F2 is "1". Next, the CPU sequentially performs the processes of "step 880 and step 890" described below. Thereafter, the CPU proceeds to step 895, and ends the routine once.

Step 880: The CPU sets the value of the ACC mode flag F2 to "0". Consequently, the mode of the ACC transitions from the second ACC mode to the first ACC mode (see the determination of "Yes" in step 730 of FIG. 7).

Step 890: The CPU displays, on the display device 51, the message for the notice of the transition of the mode of the ACC from the second ACC mode to the first ACC mode, and causes the speaker 70 to speak the message.

Furthermore, the CPU executes an "ACC condition setting routine" shown by a flowchart in FIG. 9, every predetermined time. At a predetermined timing, the CPU starts the process from step 900 of FIG. 9. The CPU proceeds to step 910, and determines whether the value of the first specific state flag F4 is "1".

In the case where the value of the first specific state flag F4 is not "1", the CPU makes the determination of "No" in step 910. The CPU proceeds directly to step 995, and ends the routine once.

Meanwhile, in the case where the value of the first specific state flag F4 is "1", the CPU makes the determination of "Yes" in step 910. The CPU proceeds to step 920, and determines whether the current time point is a "time point immediately after the ACC condition setting button 60 has been depressed" (that is, whether the ACC condition change request has been generated by the depression of the ACC condition setting button 60). Hereinafter, the "time point immediately after the ACC condition setting button 60 has been depressed" is also referred to as merely "depression time point".

In the case where the current time point is not the "depression time point", the CPU makes the determination of "No" in step 920. The CPU proceeds directly to step 995, and ends the routine once.

Meanwhile, in the case where the current time point is the "depression time point", the CPU makes the determination of "Yes" in step 920, and sequentially performs the processes of "step 930 and step 940" described below. Thereafter, the CPU proceeds to step 995, and ends the routine once.

Step 930: The CPU accepts the ACC condition change request, and in the RAM, stores the inter-vehicle distance Dfx(a) that is included in the traveling state relevant information at the current time point (that is, the change request acceptance time point), as the target inter-vehicle distance Dtgt2 for the second ACC mode.

Step 940: The CPU sets the value of the ACC mode flag F2 to "1". Thereby, the mode of the ACC transitions from the first ACC mode to the second ACC mode (see the determination of "No" in step 730 of FIG. 7).

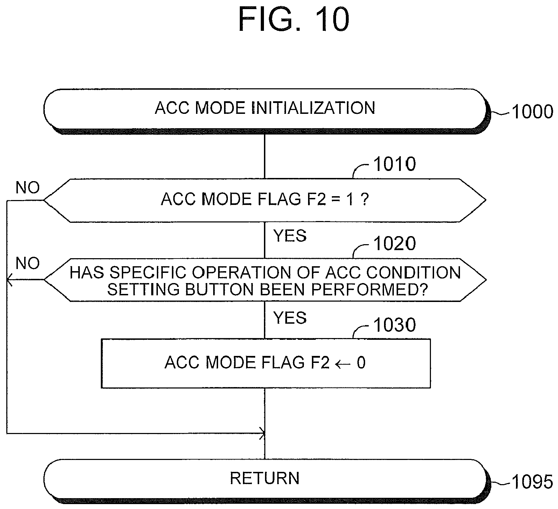

Furthermore, the CPU executes an "ACC mode initialization routine" shown by a flowchart in FIG. 10, every predetermined time. At a predetermined timing, the CPU starts the process from step 1000 of FIG. 10. The CPU proceeds to step 1010, and determines whether the value of the ACC mode flag F2 is "1".

In the case where the value of the ACC mode flag F2 is not "1", the CPU makes the determination of "No" in step 1010. The CPU proceeds directly to step 1095, and ends the routine once.

Meanwhile, in the case where the value of the ACC mode flag F2 is "1", the CPU makes the determination of "Yes" in step 1010. The CPU proceeds to step 1020, and determines whether the current time point is a "time point immediately after a specific operation has been performed to the ACC condition setting button 60" (that is, a specific operation of the ACC condition setting button 60 has been performed). In the embodiment, the specific operation is a long-press operation for a predetermined period or more. The specific operation may be another operation of the ACC condition setting button 60 (for example, multiple depressions of the ACC condition setting button 60 in a predetermined period).

In the case where the specific operation of the ACC condition setting button 60 has not been performed, the CPU makes the determination of "No" in step 1020. The CPU proceeds directly to step 1095, and ends the routine once.

In the case where the specific operation of the ACC condition setting button 60 has been performed, the CPU makes the determination of "Yes" in step 1020. The CPU proceeds to step 1030, and sets the value of the ACC mode flag F2 to "0". Thereby, the CPU makes the determination of "Yes" in step 730 of the routine in FIG. 7, and therefore, the mode of the ACC transitions from the second ACC mode to the first ACC mode. Thereafter, the CPU proceeds to step 1095, and ends the routine once.

As described above, in the case where the driver hopes to change the target traveling condition in the ACC during the execution of the ACC, the driver, first, operates the accelerator pedal 11a or the brake pedal 12a, and thereby, adjusts and changes the inter-vehicle distance between the own vehicle 100 and the ACC object vehicle 110, to a preferred inter-vehicle distance. In the case where the traveling state of the own vehicle after this change is the first specific state, the first device turns on the first indicator 52. Consequently, the driver can recognize that the inter-vehicle distance Dfx(a) between the own vehicle and the ACC object vehicle at the current time point can be set as the target inter-vehicle distance Dtgt in the second ACC mode. In the first specific state, when the driver depresses the ACC condition setting button 60 to generate the ACC condition change request, the inter-vehicle distance Dfx(a) at the time point when the ACC condition change request is generated (that is, the change request acceptance time point) is stored in the RAM, as the target inter-vehicle distance Dtgt2 for the second ACC mode. Thereafter, the ACC (the ACC in the second ACC mode) is executed such that the target inter-vehicle distance Dtgt2 is kept. Thus, with the first device, the driver can set the driver's preferred traveling condition, as the target traveling condition in the ACC.

Furthermore, the first related device has a disadvantage in that the driver cannot intuitively understand the correspondence relation between the above-described three levels of the inter-vehicle time and degrees of the inter-vehicle distance. Meanwhile, with the first device, the driver can make a state where the own vehicle is a preferred inter-vehicle distance away from the ACC object vehicle, by the driver's operation, and therefore, the above-described disadvantage is not produced. Similarly to the first related device, the first device may be configured such that the target inter-vehicle time Tdef at the time of the execution of the ACC in the first ACC mode can be set to any of a plurality of levels (for example, three levels) based on the operation of the operation switch 18 or the like.


Second Embodiment


Next, a driving assist device according to a second embodiment of the invention (hereinafter, also referred to as "second device") will be described. The second device is different from the first device in that the second device evaluates the inter-vehicle time from the inter-vehicle distance Dfx(a) and the vehicle speed SPD of the own vehicle at the change request acceptance time point and thereafter executes the ACC such that the inter-vehicle time is kept in the second ACC mode. The following description is mainly on the difference.

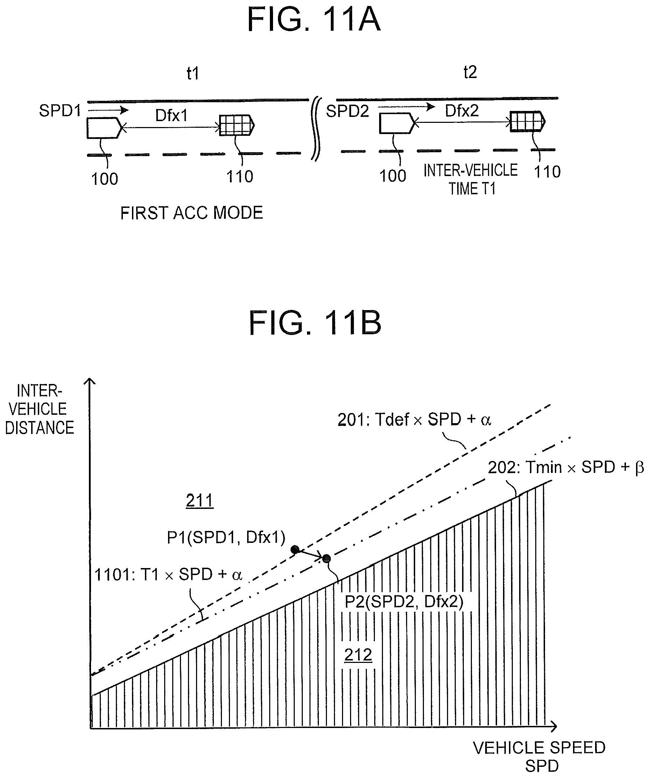

First, a behavior of the driving assist ECU 10 of the second device during the execution of the ACC will be described with a case shown in FIG. 11A and FIG. 11B. As shown on the left side of FIG. 11A, at time t1, the driving assist ECU 10 is executing the ACC in the first ACC mode. The state at time t1 is the same as that in the above-described case 1, and therefore, the description is omitted.

Thereafter, by operating the accelerator pedal 11a, the driver adjusts and changes the inter-vehicle distance between the own vehicle 100 and the ACC object vehicle 110. While the driver is operating the accelerator pedal 11a, the ACC is suspended. As shown on the right side of FIG. 11A, at time t2 when a predetermined time has elapsed since time t1, the inter-vehicle distance is the inter-vehicle distance Dfx2, and the vehicle speed of the own vehicle 100 is SPD2 (> SPD1). On this occasion, as shown in FIG. 11B, the point P2 specified by the vehicle speed SPD2 of the own vehicle and the inter-vehicle distance Dfx2 is in the first region 211. That is, the traveling state of the own vehicle at time t2 is the first specific state. Consequently, the first indicator 52 is still on.

In this case, at time t2, the driver depresses the ACC condition setting button 60. By the depression, the ACC condition change request is generated. The driving assist ECU 10 calculates an inter-vehicle time T1 (= Dfx2 / SPD2) between the own vehicle 100 and the ACC object vehicle 110 at the time point when the ACC condition change request is generated (that is, the change request acceptance time point). That is, the inter-vehicle time T1 is evaluated by dividing the inter-vehicle distance (in this case, Dfx2) between the own vehicle 100 and the ACC object vehicle 110 at the change request acceptance time point by the vehicle speed (in this case, SPD2) of the own vehicle at the change request acceptance time point. The driving assist ECU 10 stores the calculated inter-vehicle time Tl, in the RAM, as a target inter-vehicle time Ta for the second ACC mode, and changes the mode of the ACC from the first ACC mode to the second ACC mode. Thereafter, the driving assist ECU 10 executes the ACC in the second ACC mode so as to keep the target inter-vehicle time Ta (= T1).

Specifically, the driving assist ECU 10 calculates the target inter-vehicle distance Dtgt by replacing "Tdef" in Expression (3) with "Ta". Furthermore, the driving assist ECU 10 calculates the inter-vehicle deviation $\Delta D1$ by subtracting the "target inter-vehicle distance Dtgt" from the "inter-vehicle distance Dfx(a) of the ACC object vehicle (a)". Then, the driving assist ECU 10 calculates the target acceleration Gtgt in accordance with one of Expression (1) and Expression (2). As a result, the ACC is executed such that the point specified by the vehicle speed of the own vehicle 100 and the inter-vehicle distance moves on a "straight line 1101 (=T1 $\times$ SPD + $\alpha$) indicating the target inter-vehicle distance" in FIG. 11B.

Concrete Behaviors

The CPU of the driving assist ECU 10 in the second device (referred to as merely "CPU") executes the following routines.

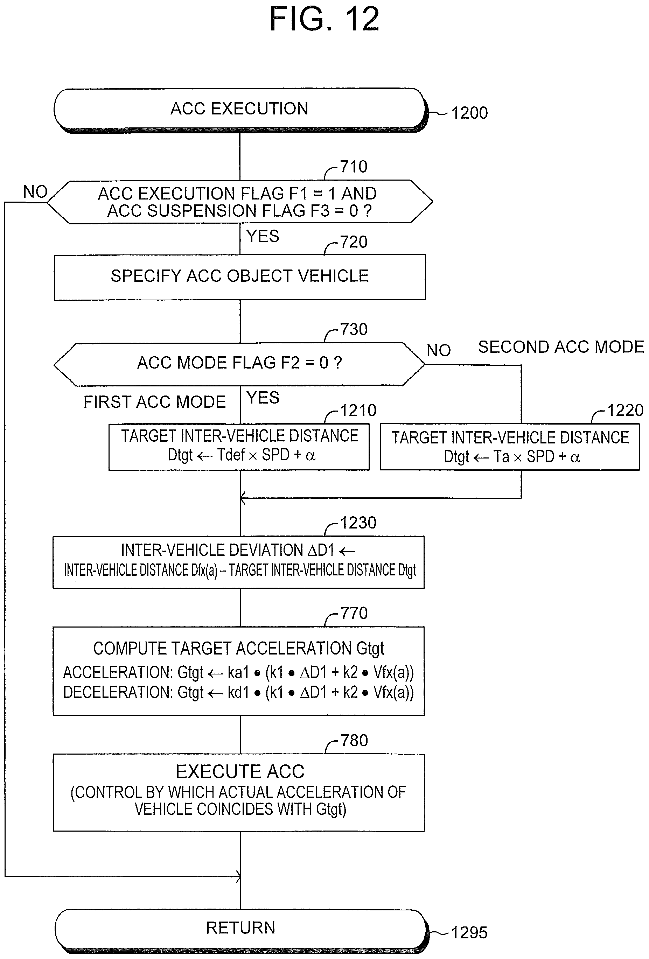

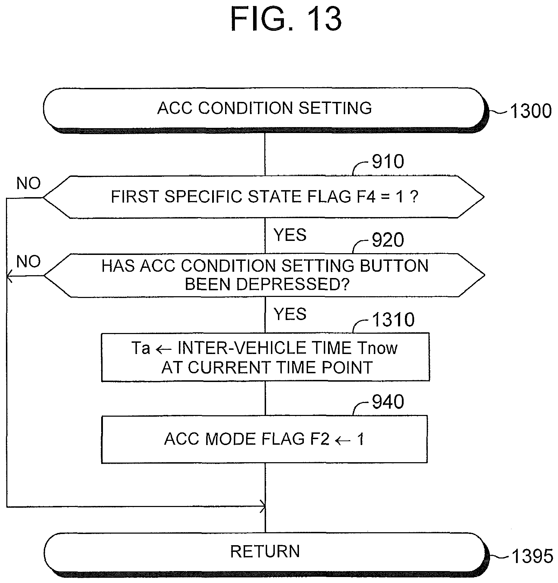

- The routine shown in FIG. 6
- An ACC execution routine shown by a flowchart in FIG. 12 and adopted instead of the routine in FIG. 7
- A routine in which step 870 to step 890 are removed from the routine in FIG. 8
- An ACC condition setting routine shown by a flowchart in FIG. 13 and adopted instead of the routine in FIG. 9
- The routine shown in FIG. 10

The following description is mainly on behaviors of the CPU of the second device based on the routines different from the routines that are executed by the CPU of the first device.

The CPU executes the routine shown in FIG. 12, every predetermined time. In FIG. 12, steps for performing the same processes as those in steps shown in FIG. 7 are denoted by the reference numerals for the steps shown in FIG. 7. Consequently, for the steps denoted by the same reference numerals as those in FIG. 7, detailed descriptions are omitted.

The CPU starts the routine in FIG. 12 from step 1200. In the case where the value of the ACC mode flag F2 is "0" at the time point when the CPU proceeds to step 730, the CPU makes the determination of "Yes" in step 730, and proceeds to step 1210. In step 1210, the CPU decides the target inter-vehicle distance Dtgt, using the target inter-vehicle distance setting graph 201 (that is, in accordance with Expression (3)).

Next, in step 1230, the CPU calculates the inter-vehicle deviation $\Delta D1$ by subtracting the target inter-vehicle distance Dtgt from the inter-vehicle distance Dfx(a) of the ACC object vehicle (a) specified in step 720. Thereafter, the CPU sequentially performs the processes of "step 770 and step 780" as described above. Then, the CPU proceeds to step 1295, and ends the routine once. As a result, the own vehicle travels so as to follow the ACC object vehicle, while keeping the target inter-vehicle distance Dtgt decided based on the target inter-vehicle time Tdef that is previously set.

Meanwhile, in the case where the values of the ACC mode flag F2 is "1" at the time point when the CPU proceeds to step 730, the CPU makes the determination of "No" in step 730, and proceeds to step 1220. In step 1220, the CPU acquires the target inter-vehicle time Ta (the target inter-vehicle time for the second ACC mode) stored in the RAM. The target inter-vehicle time Ta is calculated and stored in the RAM, in step 1310 of FIG. 13 described later (that is, at the change request acceptance time point). Then, the CPU decides the target inter-vehicle distance Dtgt by replacing "Tdef" in Expression (3) with "Ta". Thereafter, the CPU sequentially performs the processes of "step 1230, step 770 and step 780" described above. Then, the CPU proceeds to step 1295, and ends the routine once. As a result, the own vehicle travels so as to follow the ACC object vehicle, while keeping the target inter-vehicle distance Dtgt decided based on the target inter-vehicle time Ta at the change request acceptance time point.

Furthermore, as described above, the CPU executes the routine in which 870 to 890 are removed from the routine in FIG. 8. This is because in the second device, the target inter-vehicle time Ta does not fall below the minimum inter-vehicle time Tmin even in the second ACC mode and therefore it is not necessary to change the mode of the ACC mode from the second ACC mode to the first ACC mode.

Furthermore, the CPU executes the routine shown in FIG. 13, every predetermined time. The routine shown in FIG. 13 is a routine in which step 930 of FIG. 9 is replaced with step 1310. In FIG. 13, steps for performing the same processes as those in steps shown in FIG. 9 are denoted by the reference numerals for the steps show in FIG. 9. Consequently, for the steps denoted by the same reference numerals as those in FIG. 9, detailed descriptions are omitted.

At the time point when the CPU proceeds to step 920 of FIG. 13, in the case where the current time point is the "depression time point", the CPU makes the determination of "Yes" in step 920, and proceeds to step 1310. In step 1310, the CPU calculates an inter-vehicle time Tnow (= the inter-vehicle distance Dfx(a) of the ACC object vehicle (a) / the vehicle speed SPD of the own vehicle) at the current time point, and stores the calculated inter-vehicle time Tnow in the RAM, as the target inter-vehicle time Ta for the second ACC mode. Thereafter, the CPU performs the process of step 940 as described above. Then, the CPU proceeds to step 1395, and ends the routine once.

As described above, in the case where the traveling state of the own vehicle is the first specific state, the second device can set the inter-vehicle time at the time point when the ACC condition setting button 60 is depressed (that is, the change request acceptance time point), as the target inter-vehicle time Ta for the second ACC mode. Thus, with the second device, the driver can set the driver's preferred traveling condition, as the target traveling condition in the ACC. After that, the second device executes the ACC such that the target inter-vehicle time Ta is kept. Consequently, in the case where the ACC object vehicle accelerates or decelerates, the inter-vehicle distance between the own vehicle 100 and the ACC object vehicle 110 is automatically adjusted such that the target inter-vehicle time Ta is kept. Specifically, as shown FIG. 11B, the inter-vehicle distance is adjusted such that the point specified by the vehicle speed SPD of the own vehicle and the inter-vehicle distance between the own vehicle and the ACC object vehicle moves on the straight line 1101.

The above-described first device changes the mode of the ACC from the second ACC mode to the first ACC mode, when the point specified by the vehicle speed SPD of the own vehicle and the inter-vehicle distance enters the second region 212 due to the acceleration of the ACC object vehicle in the case where the first device is executing the ACC in the second ACC mode. On this occasion, in the case where the driver hopes to execute the ACC in the second ACC mode again, the driver needs to depress the ACC condition setting button 60 again, after the driver adjusts the positional relation (inter-vehicle distance) between the own vehicle and the ACC object vehicle, for example, by decelerating the own vehicle. Consequently, the driver has a burdensome feeling. Meanwhile, in the second device, the mode of the ACC does not transition from the second ACC mode to the first ACC mode, even when the ACC object vehicle accelerates. Consequently, the second device allows the driver to have a burdensome feeling less frequently.

Third Embodiment

Next, a driving assist device according to a third embodiment of the invention (hereinafter, also referred to as "third device") will be described. The third device executes a "lane keeping control" in addition to the ACC by the first device or second device.

In the embodiment, by operating the operation switch 18, the driver can select whether to execute lane keeping control. When the driver performs a predetermined operation using the operation switch 18, a LTC start request or a LTC end request (cancel request) is generated in response to the operation.

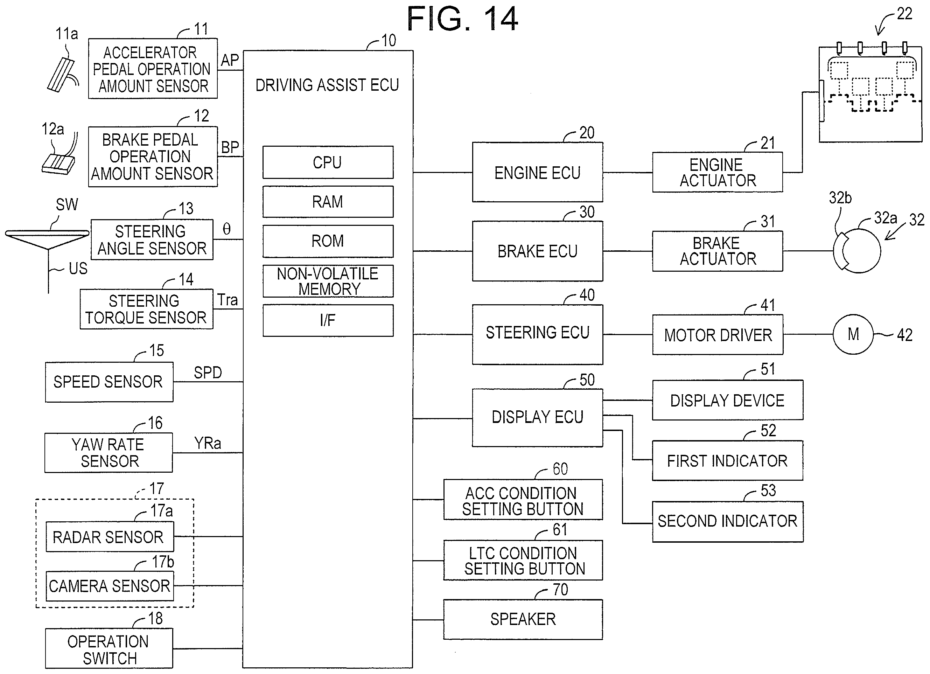

As shown in FIG. 14, the third device includes a second indicator 53 and a LTC condition setting button 61, in addition to the constituents of the first and second devices. The second indicator 53 is connected to the display ECU 50 of the third device. The second indicator 53 is a lamp that is provided at a position allowing the driver to visually recognize the lamp during driving (for example, on an instrument panel). The second indicator 53 gives, to the driver, a notice of whether the traveling state (traveling situation) of the own vehicle at a certain time point is a state where a target traveling condition in lane keeping control is permitted to be changed (hereinafter, referred to as "second specific state" or "second specific situation"). The "target traveling condition in lane keeping control" is a condition that the own vehicle travels along a predetermined target traveling line that is set in a traveling lane specified by a pair of mark lines. It can be said that the second specific state is a state where the own vehicle can keep a safe "distance in the road width direction (that is, lateral distance)" with respect to both of the pair of road mark lines even when the target traveling line is changed (set) such that the distance between the own vehicle and one of the pair of road mark lines (that is, a reference mark line) at that time point is kept.

The display ECU 50 can turn on or turn off the second indicator 53, in response to an instruction from the driving assist ECU 10. The second indicator 53 is turned on when the traveling state of the own vehicle is the second specific state, and is turned off when the traveling state of the own vehicle is not the second specific state. Thus, the second indicator 53 functions as a notification device that notifies the driver of the result of the determination of whether the traveling state of the own vehicle is the second specific state. The second indicator 53 may be a display device that can display a predetermined message indicating "the traveling state at the current time is the second specific state" when the traveling state of the own vehicle is the second specific state.

The LTC condition setting button 61 is connected to the driving assist ECU 10 of the third device. The LTC condition setting button 61 is a button that is operated by the driver. When the driver depresses the LTC condition setting button 61, the LTC condition setting button 61 outputs a request signal for requesting the change in the target traveling condition in lane keeping control, to the driving assist ECU 10. That is, when the driver depresses the LTC condition setting button 61, the LTC condition change request (a setting request for the LTC condition) is generated.

Lane Keeping Control (Steering Assist Control)

Next, lane keeping control will be described. The driving assist ECU 10 executes lane keeping control when lane keeping control is requested by the operation of the operation switch 18 during the execution of the ACC. Lane keeping control is control (steering assist control) by which the steering angle of the own vehicle is changed such that the own vehicle travels on an appropriate position in "the traveling lane specified by the pair of mark lines (the traveling lane along which the own vehicle is traveling)". Except that it is possible to change the target traveling condition in lane keeping control, lane keeping control is known (see Japanese Patent Application Publication No. 2008-195402, Japanese Patent Application Publication No. 2009-190464, Japanese Patent Application Publication No. 2010-6279, and Japanese Patent No. 4349210, for example). Lane keeping control is called by various names such as "lane trace control (LTC)" and "traffic jam assist control (TJA)". Hereinafter, lane keeping control is referred to as merely "LTC".

The driving assist ECU 10 decides the target traveling line (target traveling path), using the pair of the road mark lines. For example, the target traveling line is a centerline between right and left road mark lines that specify the traveling lane along which the own vehicle is traveling. The driving assist ECU 10 evaluates a steering control amount such that a lateral position of the own vehicle (for example, the center position of the traveling lane in the vehicle width direction of the own vehicle) is kept close to the target traveling line. For example, the steering control amount is a target steering angle. The road mark line includes a white line, a yellow line and the like. However, in an example described later, descriptions will be made assuming that the road mark line is a white line.

In the embodiment, the driving assist ECU 10 executes the LTC in one of a first LTC mode and a second LTC mode. The modes will be described below.

First LTC Mode

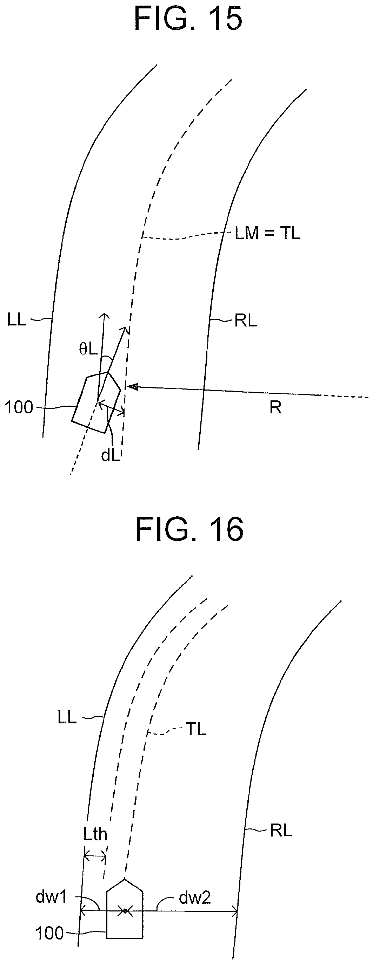

The first LTC mode is a mode in which the own vehicle travels along the target traveling line set based on the centerline of the traveling lane. As shown in FIG. 15, the driving assist ECU 10 acquires information about "a left white line (first mark line) LL that is a road mark line on the left side in the region in front of the own vehicle 100 and a right white line (second mark line) RL that is a road mark line on the right side in the region in front of the own vehicle 100", from the lane information included in the traveling state relevant information. The driving assist ECU 10 estimates a line connecting center position in the road width direction between the acquired left white line LL and right white line RL, as a "centerline of the traveling lane LM". The driving assist ECU 10 uses the centerline LM as the target traveling line.

Furthermore, the driving assist ECU 10 computes a curve radius R and curvature CL (= 1 / R) of the centerline LM, and the position and orientation of the own vehicle 100 on the traveling lane. More specifically, as shown in FIG. 15, the driving assist ECU 10 computes a distance dL between the center position in the vehicle width direction of the own vehicle 100 and the centerline LM (a distance in a direction (substantially in the road width direction) orthogonal to the traveling direction of the own vehicle 100), and a differential angle θL (yaw angle θL) between the direction (tangential direction) of the centerline LM and the traveling direction of the own vehicle 100. Each of the parameters is target traveling path information necessary for the LTC when the centerline LM is set as the target traveling line TL (the curvature CL of the target traveling line TL, the yaw angle θL with respect to the target traveling line TL, and the distance dL in the road width direction with respect to the target traveling line TL).

The driving assist ECU 10, every predetermined time, computes a target steering angle θ* by applying the curvature CL, the yaw angle θL and the distance (lateral deviation) dL to the following Expression (5). In Expression (5), Klta1, Klta2 and Klta3 are control gains that are previously set.

$$\theta* = \text{Klta1} \cdot \text{CL} + \text{Klta2} \cdot \theta L + \text{Klta3} \cdot dL \ ... \ (5)$$

The driving assist ECU 10 sends a steering command specifying the steering control amount (target steering angle θ*), to the steering ECU 40, and thereby, drives the steering motor 42. As a result, the actual steering angle θ of the own vehicle coincides with the target steering angle θ*.

Second LTC Mode

The second LTC mode is a mode in which the own vehicle travels along a target traveling line that is set by the driver as described below. As shown in FIG. 16, while the LTC is being executed in the first LTC mode, the driver changes the position of the own vehicle 100 in the road width direction, by operating the steering wheel SW to change the steering state (steering angle) of the own vehicle 100. Suppose that the position of the own vehicle 100 in the road width direction deviates to the left white line LL side as a result.

The driving assist ECU 10, every predetermined time, evaluates a first distance dw1 that is the distance in the road width direction between the center position in the vehicle width of the own vehicle 100 and the left white line LL and a second distance dw2 that is the distance in the road width direction between the center position in the vehicle width of the own vehicle 100 and the right white line RL, based on the lane information that is included in the traveling state relevant information.

Furthermore, based on the first distance dw1 and the second distance dw2, the driving assist ECU 10 determines whether the traveling state of the own vehicle 100 is the second specific state. Specifically, the driving assist ECU 10 determines whether the smaller one of the first distance dw1 and the second distance dw2 is equal to or larger than a predetermined distance threshold Lth. For example, the distance threshold Lth is a value ($\gamma$ + W / 2) resulting from adding a predetermined positive distance $\gamma$ to half of a vehicle width W of the own vehicle 100. In the example shown in FIG. 16, the first distance dw1 is smaller than the second distance dw2. Consequently, in the case where the first distance dw1 is equal to or larger than the distance threshold Lth, the driving assist ECU 10 determines that the traveling state of the own vehicle 100 is the second specific state. In the case where the traveling state of the own vehicle 100 is the second specific state, the driving assist ECU 10 turns on the second indicator 53 through the display ECU 50. Consequently, the driver can recognize that it is possible to set the target traveling line such that the first distance dw1 at the current time point is kept.

When the driver depresses the LTC condition setting button 61 in the second specific state (that is, in the state where the second indicator 53 is on), the driving assist ECU 10 accepts the LTC condition change request generated by the depression. The time point when the driving assist ECU 10 accepts the LTC condition change request is also referred to as "change request acceptance time point" or "change request acceptance time point for the LTC", similarly to the first device and the second device.

When the driving assist ECU 10 accepts the LTC condition change request, the driving assist ECU 10 stores, in the RAM, information relevant to the white line (in this example, the left white line LL) that specifies the smaller one of the first distance dw1 and the second distance dw2 at the change request acceptance time point for the LTC, as a reference white line. Furthermore, the driving assist ECU 10 stores, in the RAM, the smaller one (in this example, the first distance dw1) of the first distance dw1 and the second distance dw2 at the change request acceptance time point for the LTC, as a target lateral distance Ltgt from the reference white line. Then, the driving assist ECU 10 transitions the mode of the LTC from the first LTC mode to the second LTC mode. The driving assist ECU 10 sets a position that is the target lateral distance Ltgt away from the left white line LL as the reference white line to the centerline LM side in the road width direction, as the target traveling line TL. Thereafter, the driving assist ECU 10 computes the target traveling path information (the curvature CL of the target traveling line TL, the yaw angle $\theta$L with respect to the target traveling line TL, and the distance dL in the road width direction with respect to the target traveling line TL) necessary for the LTC. The driving assist ECU 10 computes the target steering angle $\theta$* by applying the curvature CL, the yaw angle $\theta$L and the lateral deviation dL to Expression (5).

On the other hand, in the case where the smaller one of the first distance dw1 and the second distance dw2 is smaller than the distance threshold Lth, the driving assist ECU 10 determines that the traveling state of the own vehicle 100 is not the second specific state. On this occasion, the driving assist ECU 10 turns off the second indicator 53 through the display ECU 50. Consequently, the driver can recognize that it is not possible to set the target traveling line such that the first distance dw1 or second distance dw2 at the current time point is kept. Even when the LTC condition setting button 61 is depressed in this state, the driving assist ECU 10 does not accept the LTC condition change request generated by the depression. Thus, in the case where the smaller one of the first distance dw1 and the second distance dw2 is smaller than the distance threshold Lth, the driving assist ECU 10 does not change the target traveling condition in the LTC. Consequently, it is possible to prevent the target traveling condition in the LTC from being changed in a state where the own vehicle 100 is excessively close to the white line. In other words, it is possible to prevent the changed target traveling line from being excessively close to any of the left white line LL and the right white line RL.

Concrete Behaviors

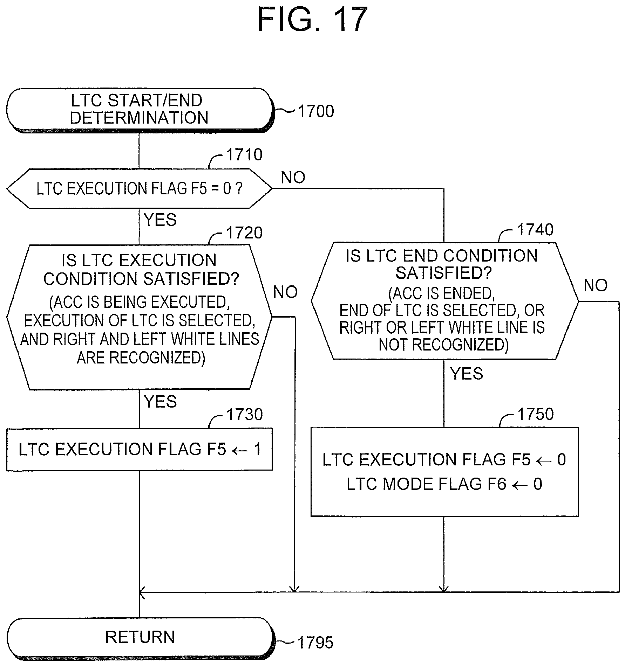

Next, concrete behaviors of the CPU of the driving assist ECU 10 of the third device will be described. The CPU executes a "LTC start/end determination routine" shown by a flowchart in FIG. 17, every predetermined time.

At a predetermined timing, the CPU starts the routine in FIG. 17, from step 1700. The CPU proceeds to step 1710, and determines whether the LTC execution flag F5 is "0". The LTC execution flag F5 indicates that the LTC is being executed when the value of the LTC execution flag F5 is "1", and indicates that the LTC is not being executed when the value of the LTC execution flag F5 is "0". The value of the LTC execution flag F5 (and the values of various flags described later) is set to "0" in the above-described initialization routine. Furthermore, the value of the LTC execution flag F5 is set to "0" also in step 1750 described later.

If the value of the LTC execution flag F5 is "0" (the LTC is not being executed), the CPU makes the determination of "Yes" in step 1710. The CPU proceeds to step 1720, and determines whether a predetermined LTC execution condition (an execution condition for lane keeping control) is satisfied.

The LTC execution condition is satisfied when all of the following condition 5 to condition 7 are satisfied.

(Condition 5): The ACC is being executed.
(Condition 6): The LTC start request is generated by the operation of the operation switch 18.

(Condition 7): The left white line LL and the right white line RL can be recognized to a predetermined distance in front of the own vehicle, by the camera sensor 17b.

In the case where the LTC execution condition is not satisfied, the CPU makes the determination of "No" in step 1720. The CPU proceeds directly to step 1795, and ends the routine once.

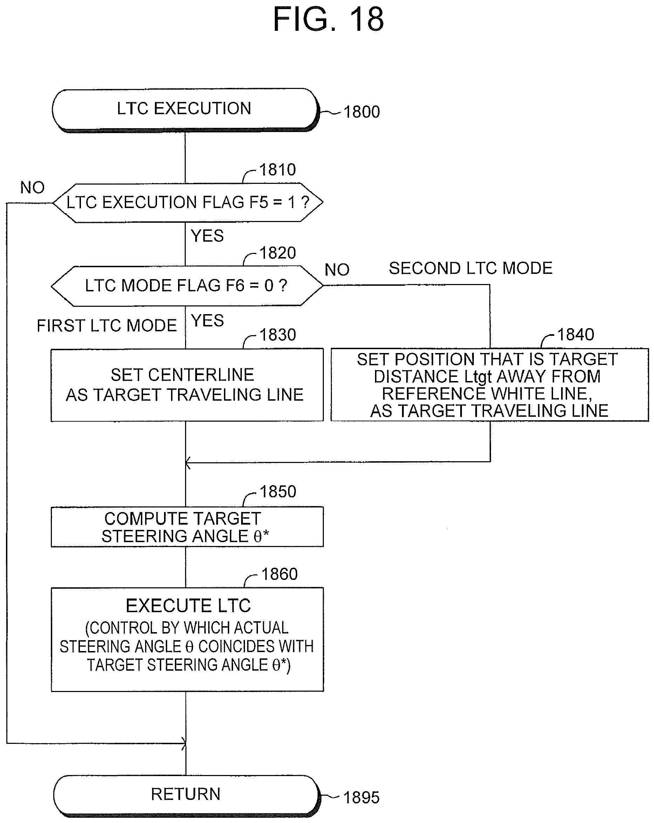

Meanwhile, in the case where the LTC execution condition is satisfied, the CPU makes the determination of "Yes" in step 1720, and proceeds to step 1730. The CPU sets the values of the LTC execution flag F5 to "1" in step 1730. The CPU proceeds to step 1795, and ends the routine once. As a result, the LTC is executed (see the determination of "Yes" in step 1810 of FIG. 18).

On the other hand, in the case where the value of the LTC execution flag F5 is "1" (the LTC is being executed) at the time point when the CPU executes the process of step 1710, the CPU makes the determination of "No" in step 1710. The CPU proceeds to step 1740, and determines whether a predetermined LTC end condition (an end condition for lane keeping control) is satisfied.

The LTC end condition is satisfied when at least one of the following condition 8 to condition 10 is satisfied.

(Condition 8): The ACC is ended.
(Condition 9): The LTC end request is generated by the operation of the operation switch 18.
(Condition 10): At least one of the left white line LL and the right white line RL cannot be recognized to the predetermined distance in front of the own vehicle, by the camera sensor 17b. That is, information necessary for the LTC cannot be acquired.

In the case where the LTC end condition is not satisfied, the CPU makes the determination of "No" in step 1740. The CPU proceeds directly to step 1795, and ends the routine once.

Meanwhile, in the case where the LTC end condition is satisfied, the CPU makes the determination of "Yes" in step 1740. The CPU proceeds to step 1750, and sets both of the LTC execution flag F5 and a LTC mode flag F6 to "0". The LTC mode flag F6 indicates that the mode of the LTC is the first LTC mode when the value of the LTC mode flag F6 is "0", and indicates that the mode of the LTC is the second LTC mode when the value of the LTC mode flag F6 is "1". Thereafter, the CPU proceeds to step 1795, and ends the routine once. As a result, the LTC is stopped (see the determination of "No" in step 1810 of FIG. 18).

Furthermore, the CPU executes a "LTC execution routine" shown by a flowchart in FIG. 18, every predetermined time. At a predetermined timing, the CPU starts the process from step 1800 of FIG. 18. The CPU proceeds to step 1810, and determines whether the value of the LTC execution flag F5 is "1".

In the case where the value of the LTC execution flag F5 is not "1", the CPU makes the determination of "No" in step 1810. The CPU proceeds directly to step 1895, and ends the routine once. In this case, the LTC is not executed.

Meanwhile, in the case where the value of the LTC execution flag F5 is "1", the CPU makes the determination of "Yes" in step 1810. The CPU proceeds to step 1820, and determines whether the LTC mode flag F6 is "0". In the case where the LTC mode flag F6 is "0", the CPU makes the determination of "Yes" in step 1820, and sequentially performs the processes of "step 1830, step 1850 and step 1860" described below. That is, the CPU executes the LTC in the first LTC mode. Thereafter, the CPU proceeds to step 1895, and ends the routine once.

Step 1830: The CPU sets the centerline LM of the traveling lane, as the target traveling line TL, based on the lane information that is included in the traveling state relevant information acquired at the current time point.

Step 1850: The CPU computes the target traveling path information (the curvature CL, the yaw angle $\theta$L and the lateral deviation dL) based on the target traveling line TL, and computes the target steering angle $\theta$* by applying the target traveling path information to the above Expression (5).

Step 1860: The CPU executes the LTC (steering assist control) such that the actual steering angle $\theta$ of the own vehicle 100 coincides with the target steering angle $\theta$*.

On the other hand, in the case where the value of the LTC mode flag F6 is "1" at the time point when the CPU proceeds to step 1820, the CPU makes the determination of "No" in step 1820, and sequentially performs the process of step 1840 described below and the processes of "step 1850 and step 1860" described above. That is, the CPU executes the LTC in the second LTC mode. Thereafter, the CPU proceeds to step 1895, and ends the routine once.

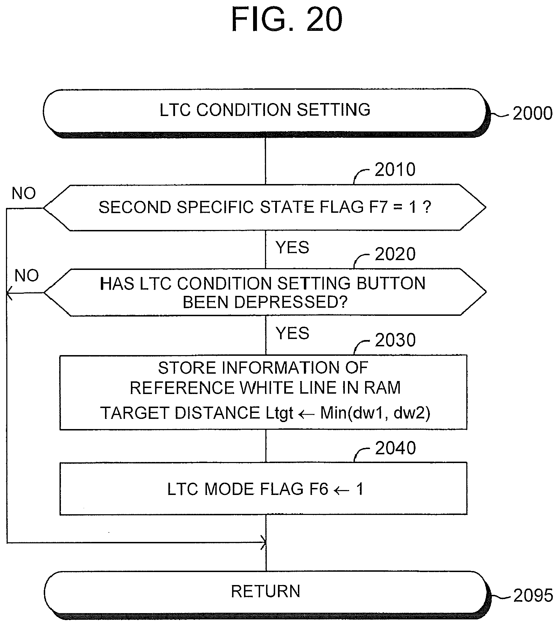

In step 1840, the CPU reads "the information of the reference white line and the information of the target lateral distance Ltgt (the target lateral distance from the reference mark line for the second LTC mode)" stored in the RAM in step 2030 of FIG. 20 described later. The CPU sets a position that is the target lateral distance Ltgt away from the reference white line in the road width direction, as the target traveling line TL. Thereafter, the CPU sequentially executes the processes of step 1850 and step 1860, in the above-described way.

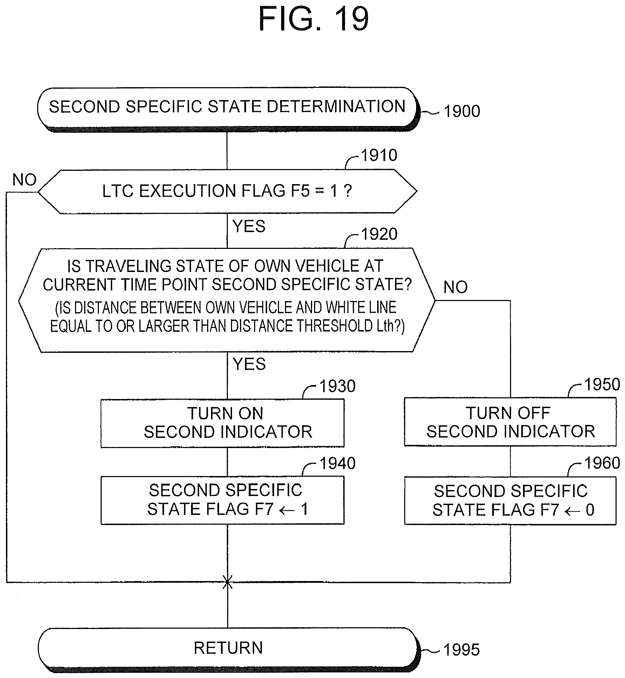

Furthermore, the CPU executes a "second specific state determination routine" shown by a flowchart in FIG. 19, every predetermined time. At a predetermined timing, the CPU starts the process from step 1900 of FIG. 19. The CPU proceeds to step 1910, and determines whether the value of the LTC execution flag F5 is "1".

In the case where the value of the LTC execution flag F5 is not "1", the CPU makes the determination of "No" in step 1910. The CPU proceeds directly to step 1995, and ends the routine once.

Meanwhile, in the case where the value of the LTC execution flag F5 is "1", the CPU makes the determination of "Yes" in step 1910. The CPU proceeds to step 1920, and determines whether the traveling state of the own vehicle at the current time point is the second specific state, based on the traveling state relevant information. Specifically, the CPU determines whether the smaller one of the first distance dw1 and the second distance dw2 is equal to or larger than the above-described predetermined distance threshold Lth.

Suppose that the smaller one of the first distance dw1 and the second distance dw2 is equal to or larger than the predetermined distance threshold Lth. In this case, the CPU makes the determination of "Yes" in step 1920, and sequentially performs the processes of "step 1930 and step 1940" described below. Thereafter, the CPU processes directly to step 1995, and ends the routine once.

Step 1930: The CPU turns on the second indicator 53 using the display ECU 50.

Step 1940: The CPU sets the value of a second specific state flag F7 to "1". The second specific state flag F7 indicates that the traveling state of the own vehicle is the second specific state when the value of the second specific state flag F7 is "1", and indicates that the traveling state of the own vehicle is not the second specific state when the value of the second specific state flag F7 is "0".

On the other hand, in the case where the smaller one of the first distance dw1 and the second distance dw2 is smaller than the predetermined distance threshold Lth at the time point when the CPU proceeds to step 1920, the CPU makes the determination of "No" in step 1920, and sequentially performs the process of "step 1950 and step 1960" described below. Thereafter, the CPU proceeds directly to step 1995, and ends the routine once.

Step 1950: The CPU turns off the second indicator 53 using the display ECU 50.

Step 1960: The CPU sets the value of the second specific state flag F7 to "0".

Furthermore, the CPU executes a "LTC condition setting routine" shown by a flowchart in FIG. 20, every predetermined time. At a predetermined timing, the CPU starts the process from step 2000 of FIG. 20. The CPU proceeds to step 2010, and determines whether the value of the second specific state flag F7 is "1".

In the case where the value of the second specific state flag F7 is not "1", the CPU makes the determination of "No" in step 2010. The CPU proceeds directly to step 2095, and ends the routine once.

Meanwhile, in the case where the value of the second specific state flag F7 is "1", the CPU makes the determination of "Yes" in step 2010. The CPU proceeds to step 2020, and determines whether the current time point is a "time point immediately after the LTC condition setting button 61 has been depressed" (that is, whether the LTC condition change request has been generated by the depression of the LTC condition setting button 61). Hereinafter, the "time point immediately after the LTC condition setting button 61 has been depressed" is also referred to as merely "depression time point".

In the case where the current time point is not the "depression time point", the CPU makes the determination of "No" in step 2020. The CPU proceeds directly to step 2095, and ends the routine once.

Meanwhile, in the case where the current time point is the "depression time point", the CPU makes the determination of "Yes" in step 2020, and sequentially performs the processes of "step 2030 and step 2040" described below. Thereafter, the CPU proceeds to step 2095, and ends the routine once.

Step 2030: The CPU accepts the LTC condition change request, and stores, in the RAM, the information specifying the white line (reference white line) having the smaller one of the first distance dw1 and the second distance dw2, based on the lane information that is included in the traveling state relevant information at the current time point (that is, the change request acceptance time point). Furthermore, the CPU stores, in the RAM, the smaller one of the first distance dw1 and the second distance dw2 at the current time point (that is, the change request acceptance time point), as the target lateral distance Ltgt. Here, "Min(A, B)" in step 2030 is a function that selects the smaller one of A and B.

Step 2040: The CPU sets the value of the LTC mode flag F6 to "1". That is, the mode of the LTC transitions from the first LTC mode to the second LTC mode (see the determination of "No" in step 1820 of the routine in FIG. 18).

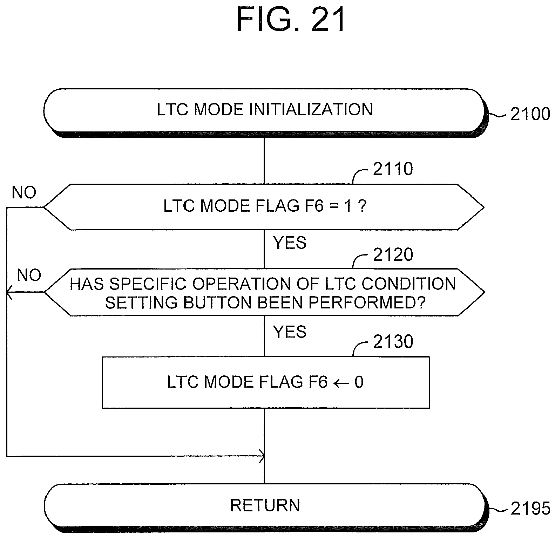

Furthermore, the CPU executes a "LTC mode initialization routine" shown by a flowchart in FIG. 21, every predetermined time. At a predetermined timing, the CPU starts the process from step 2100 of FIG. 21. The CPU proceeds to step 2110, and determines whether the value of the LTC mode flag F6 is "1".

In the case where the value of the LTC mode flag F6 is not "1", the CPU makes the determination of "No" in step 2110. The CPU proceeds directly to step 2195, and ends the routine once.

Meanwhile, in the case where the value of the LTC mode flag F6 is "1", the CPU makes the determination of "Yes" in step 2110. The CPU proceeds to step 2120, and determines whether the current time point is a "time point immediately after a specific operation has been performed to the LTC condition setting button 61" (that is, whether a specific operation of the LTC condition setting button 61 has been performed). In the embodiment, the specific operation is a long-press operation for a predetermined period or more. The specific operation may be another operation of the LTC condition setting button 61 (for example, multiple depressions of the LTC condition setting button 61 in a predetermined period).

In the case where the specific operation of the LTC condition setting button 61 has not been performed, the CPU makes the determination of "No" in step 2120. The CPU proceeds directly to step 2195, and ends the routine once.

In the case where the specific operation of the LTC condition setting button 61 has been performed, the CPU makes the determination of "Yes" in step 2120. The CPU proceeds to step 2130, and sets the value of the LTC mode flag F6 to "0". Thereby, the CPU makes the determination of "Yes" in step 1820 of the routine in FIG. 18, and therefore, the mode of the LTC transitions from the second LTC mode to the first LTC mode. Thereafter, the CPU proceeds to step 2195, and ends the routine once.

As described above, in the case where the driver hopes to change the target traveling condition in the LTC during the execution of the LTC, the driver, first, operates the steering wheel SW as the driving operation element, and thereby, adjusts and changes the distance (the distance in the road width direction) from the own vehicle to the white line (the left white line LL or the right white line RL), to a preferred distance. In the case where the traveling state of the own vehicle after this change is the second specific state, the third device turns on the second indicator 53. Consequently, the driver can recognize that the target traveling line can be set such that the distance from the own vehicle to the white line at the current time point is kept. In the second specific state, when the driver depresses the LTC condition setting button 61 to generate the LTC condition change request, the information relevant to the white line (reference white line) having the smaller one of the first distance dw1 and the second distance dw2 is stored in the RAM. Furthermore, the smaller one of the first distance dw1 and the second distance dw2 is stored in the RAM, as the target lateral distance Ltgt for the second LTC mode. Thereafter, the position that is the target lateral distance Ltgt away from the reference white line in the road width direction is set as the target traveling line. Then, the LTC (the LTC in the second LTC mode) is executed such that the own vehicle travels along the target traveling line. Thus, with the third device, the driver can set the driver's preferred traveling condition, as the target traveling condition in the LTC.

The invention is not limited to the above embodiments, and various modifications can be employed in the scope of the invention.

Modification 1

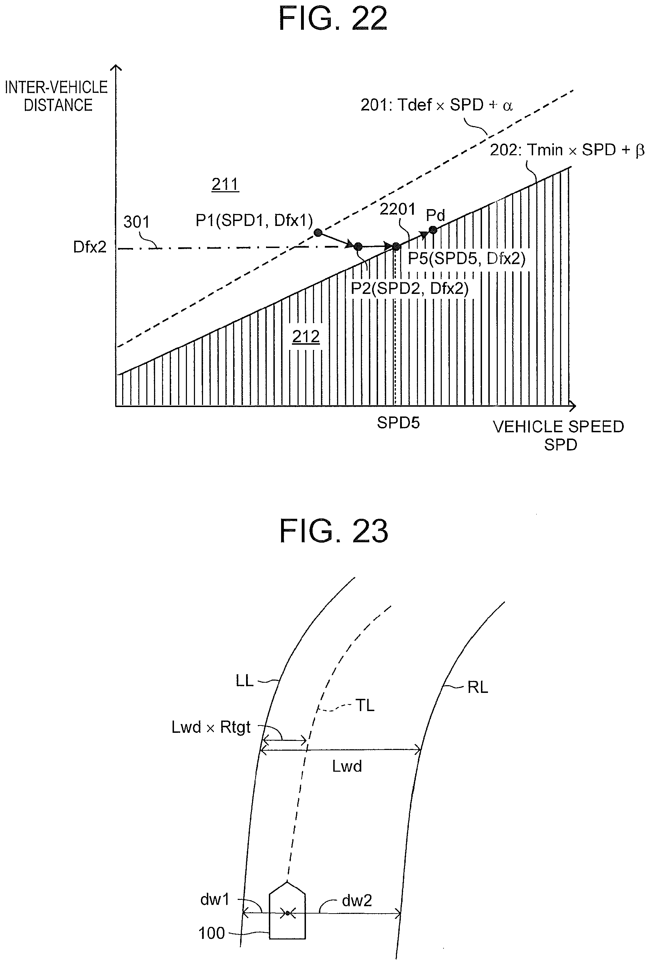

In the case where the point specified by the vehicle speed SPD of the own vehicle 100 and the inter-vehicle distance enters the second region 212 during the execution of the ACC in the second ACC mode, a modification 1 of the first device may continue the ACC in the second mode, as described below with reference to FIG. 22.

Suppose that the ACC condition change request is accepted at the time point when the point specified by the vehicle speed SPD of the own vehicle 100 and the inter-vehicle distance becomes a point P2 in FIG. 22. In this case, the driving assist ECU 10 employs the inter-vehicle distance Dfx2 as the target inter-vehicle distance Dtgt2 for the second ACC mode, and starts the ACC in the second ACC mode. Thereafter, when the ACC object vehicle accelerates, the vehicle speed of the own vehicle 100 increases, and therefore, the point specified by the vehicle speed SPD of the own vehicle 100 and the inter-vehicle distance reaches a point P5 in FIG. 22 (that is, vehicle speed = SPD5 (> SPD2), inter-vehicle distance = Dfx2). The point P5 is a point on the first specific state determination graph 202. In the case where the ACC object vehicle further accelerates in this state, the driving assist ECU 10 decides the target inter-vehicle distance using the first specific state determination graph 202. That is, in the case where the vehicle speed SPD of the own vehicle 100 becomes a vehicle speed equal to or higher than a vehicle speed (that is, SPD5) corresponding to a point at which the vehicle speed SPD of the own vehicle 100 crosses the first specific state determination graph 202, the driving assist ECU 10 executes the ACC such that the point specified by the vehicle speed of the own vehicle 100 and the inter-vehicle distance moves on the "first specific state determination graph 202 (=Tmin × SPD + β)" (see a point Pd and an arrow 2201).

Thereafter, in the case where the vehicle speed SPD of the own vehicle 100 becomes lower than the vehicle speed (that is, SPD5) corresponding to the point at which the vehicle speed SPD of the own vehicle 100 crosses the first specific state determination graph 202, the driving assist ECU 10 executes the ACC in the second ACC mode so as to keep the target inter-vehicle distance (= Dfx2). That is, the driving assist ECU 10 executes the ACC such that the point specified by the vehicle speed SPD of the own vehicle 100 and the inter-vehicle distance is on a straight line (chain line) 301 indicating the inter-vehicle distance Dfx2 in FIG. 22.

When the point specified by the vehicle speed SPD of the own vehicle and the inter-vehicle distance enters the second region 212 in the second ACC mode due to the acceleration of the ACC object vehicle, the above-described first device changes the mode of the ACC from the second ACC mode to the first ACC mode. On this occasion, in the case where the driver hopes to execute the ACC in the second ACC mode again, the driver needs to depress the ACC condition setting button 60 again, after the driver adjusts the positional relation (inter-vehicle distance) between the own vehicle and the ACC object vehicle. Consequently, the driver has a burdensome feeling. Meanwhile, the device according to the modification 1 can keep a safe distance from the ACC object vehicle even when the ACC object vehicle accelerates, and can continue the ACC in the second ACC mode when the point specified by the vehicle speed SPD of the own vehicle and the inter-vehicle distance returns to the first region 211. Therefore, the device according to the modification 1 allows the driver to have a burdensome feeling less frequently than the first device.

Modification 2

The first specific state determination graph 202 is not limited to linear functions as exemplified above. The first specific state determination graph 202 may be defined by another function (for example, a quadratic function, a cubic function or a higher-order function) in which the inter-vehicle distance (distance threshold) between the own vehicle and the ACC object vehicle is larger as the vehicle speed SPD of the own vehicle is higher.

Modification 3

Instead of or in addition to the first indicator 52, the speaker 70 may be employed as a notification device that notifies the driver of whether the traveling state of the own vehicle is the first specific state. The driving assist ECU 10 may cause the speaker 70 to speak a message indicating whether the traveling state of the own vehicle at the current time point is the first specific state. Furthermore, the driving assist ECU 10 may display, on the display device 51, a notice (a predetermined message and/or mark, for example) indicating whether the traveling state of the own vehicle at the current time point is the first specific state.

Modification 4

The first device and the second device do not need to include the first indicator 52. In this configuration, the driver changes the traveling state of the own vehicle in accordance with the driver's preference, and thereafter, generates the ACC condition change request using the ACC condition setting button 60. If the traveling state of the own vehicle at the current time point is the first specific state at this time, the first device and the second device stores, in the RAM, the inter-vehicle distance Dfx(a) at the time point when the ACC condition change request is generated (that is, the change request acceptance time point) or the inter-vehicle time evaluated by the inter-vehicle distance Dfx(a) at the time point and the vehicle speed SPD. Then, the mode of the ACC transitions from the first ACC mode to the second ACC mode. On the other hand, in the case where the traveling state of the own vehicle at the current time point is not the first specific state when the ACC condition change request is generated using the ACC condition setting button 60, the first device and the second device may perform a notification (turning-on of another indicator, display of a message, speech generation and the like) indicating that the ACC condition change request cannot be accepted.

Modification 5

The ACC condition setting button 60 only needs to be a switch that is operated when the change in the target traveling condition in the ACC is requested and that generates a signal indicating the request. Consequently, the operation switch 18 may have the function of the ACC condition setting button 60. Furthermore, a voice recognition device that recognizes a voice (a voice input corresponding to the ACC condition change request) from the driver may be used instead of the ACC condition setting button 60. Such a device is equivalent to a switch that is operated by the voice, and can constitute the request generation device in the invention.

Modification 6

When the driver operates the brake pedal 12a, the first device and the second device may end (cancel) the ACC once. In this configuration, when the driver depresses the ACC condition setting button 60 after the driver restarts the ACC by operating the operation switch 18 again, the first device and the second device, if the traveling state at the time point is the first specific state, may store the inter-vehicle distance Dfx(a) at the depression time point (the time point when the ACC condition change request is generated) or the inter-vehicle time evaluated by the inter-vehicle distance Dfx(a) at the time point and the vehicle speed SPD, in the RAM, and may restart the ACC in the second ACC mode.

Modification 7

Instead of or in addition to the second indicator 53, the speaker 70 may be employed as a notification device that notifies the driver of whether the traveling state of the own vehicle is the second specific state. The driving assist ECU 10 may cause the speaker 70 to speak a message indicating whether the traveling state of the own vehicle at the current time point is the second specific state. Furthermore, the driving assist ECU 10 may display, on the display device 51, a notice (a predetermined message and/or mark, for example) indicating whether the traveling state of the own vehicle at the current time point is the second specific state.

Modification 8

The third device does not need to include the second indicator 53. In this configuration, the driver changes the traveling state of the own vehicle in accordance with the driver's preference, and thereafter, generates the LTC condition change request using the LTC condition setting button 61. If the traveling state of the own vehicle at the current time point is the second specific state at this time, the third device stores, in the RAM, the reference white line and the target lateral distance Ltgt at the time point when the LTC condition change request is generated (that is, the change request acceptance time point).

Modification 9

The LTC condition setting button 61 only needs to be a switch that is operated when the setting of the target traveling condition in the LTC is requested and that generates a signal indicating the request. Furthermore, a voice recognition device that recognizes a voice (a voice input corresponding to the LTC condition change request) from the driver may be used instead of the LTC condition setting button 61. Such a device is equivalent to a switch that is operated by the voice, and can constitute the request generation device in the invention.

Modification 10

The third device may set a white line that is of the left white line LL and the right white line RL and that is more distant from the own vehicle 100, as the reference white line. Specifically, in step 2030 of the routine in FIG. 20, the CPU stores, in the RAM, information relevant to the white line that is of the left white line LL and the right white line RL and that is more distant from the own vehicle 100, as the reference white line, and stores, in the RAM, the larger one of the first distance dw1 and the second distance dw2, as the target lateral distance Ltgt from the reference white line. Then, when the CPU proceeds to step 1840 of the routine in FIG. 18, the CPU sets a position that is the target lateral distance Ltgt away from the reference white line, as the target traveling line TL.

Modification 11

The method for setting the target traveling line in the second LTC mode is not limited to the above example. For example, suppose that the driver depresses the LTC condition setting button 61 in a state where the own vehicle 100 deviates to the left white line LL side as shown in FIG. 23. In this case, in step 2030 of the routine in FIG. 20 (that is, at the change request acceptance time point), the CPU stores, in the RAM, the information relevant to the white line having the smaller one (= ds) of the first distance dw1 and the second distance dw2, as the reference white line. Furthermore, the CPU stores, in the RAM, a ratio Rtgt (= ds / Lwd) of the distance (= ds) to a road width Lwd (that is, the sum of the first distance dw1 and the second distance dw2) of the traveling lane. Then, when the CPU proceeds to step 1840 of the routine in FIG. 18, the CPU sets a position that is a distance (= Lwd × Rtgt) corresponding to the ratio Rtgt to the road width Lwd away from the reference white line, as the target traveling line TL. With this configuration, even when the road width Lwd changes (decreases) while the LTC is being executed in the second LTC mode, the own vehicle 100 can travel on a position that is close to the driver's preference (that is, a position that deviates to the left white line LL side).

Modification 12

The third device may evaluate a target steering torque Tr* as the steering control amount, as follows, and may execute the LTC. The driving assist ECU 10, every predetermined time, calculates a target yaw rate YRc* by applying the curvature CL, the vehicle speed SPD, the yaw angle θL and the distance dL to the following Expression (5'). Furthermore, the driving assist ECU 10 evaluates the target steering torque Tr* for obtaining the target yaw rate YRc*, by applying the target yaw rate YRc*, the actual yaw rate YRa and the vehicle speed SPD to a look-up table Map1(YRc*, YRa, SPD) (that is, Tr* = Map1(YRc*, YRa, SPD)). Then, the driving assist ECU 10 controls the steering motor 42 using the steering ECU 40, such that the actual torque to be generated by the steering motor 42 coincides with the target steering torque Tr*. In Expression (5'), K1, K2 and K3 are control gains. The look-up table Map1(YRc*, YRa, SPD) is stored in the ROM.

$$YRc^* = K1 \times dL + K2 \times \theta L + K3 \times CL \times SPD \ ... \ (5')$$

Modification 13

In the third device, the button for generating the ACC condition change request and the button for generating the LTC condition change request may be implemented as a single button (common button). For example, in the case where the common button is depressed when the first indicator 52 is on, the ACC condition change request is generated. In the case where the common button is depressed when the second indicator 53 is on, the LTC condition change request is generated. In the case where the common button is depressed when both of the first indicator 52 and the second indicator 53 are on, both of the ACC condition change request and the LTC condition change request may be generated.

Modification 14

In the third device, the first indicator 52 and the second indicator 53 may be implemented as a single indicator (common indicator). For example, the common indicator may be a two-color LED that can be lighted in two different colors. In this configuration, in the case where the traveling state of the own vehicle is the first specific state, the driving assist ECU 10 lights the common indicator in a first color. Furthermore, in the case where the traveling state of the own vehicle is the second specific state, the driving assist ECU 10 lights the common indicator in a second color different from the first color.

Modification 15

The third device executes lane keeping control (LTC) only during the execution of adaptive cruise control (ACC). The third device may be configured to execute lane keeping control without the execution of adaptive cruise control. In this configuration, the LTC execution condition in step 1720 of FIG. 17 is replaced with a condition that is satisfied when both of condition 6 and condition 7 are satisfied. Furthermore, the LTC end condition in step 1740 of FIG. 17 is replaced with a condition that is satisfied when at least one of condition 9 and condition 10 is satisfied.

**Claims**

1. A driving assist device comprising:

a driving operation element (11a, 12a, SW) that is operated by a driver of an own vehicle (100), a driving state of the own vehicle changing when the driving operation element is operated by the driver;
an information acquisition unit (15, 17) configured to acquire traveling state relevant information indicating a traveling state that includes a state of a periphery of the own vehicle and the driving state of the own vehicle;
a driving assist control unit (10, 20, 30, 40) configured to control the own vehicle based on the traveling state relevant information such that the own vehicle travels in a state where a target traveling condition is met, the target traveling condition being a condition to be met in driving assist control;
a determination unit configured to determine, based on the traveling state relevant information, whether the traveling state changed by the operation of the driving operation element is a specific state, the specific state being a state where the target traveling condition is permitted to be changed;
a request generation device (60, 61) configured to
accept a predetermined operation or a predetermined input by the driver and
generate a condition change request when the predetermined operation or the predetermined input is performed while the own vehicle is in the driving assist control, the condition change request being a request by which the target traveling condition is changed; and
a condition change unit configured to change the target traveling condition based on the traveling state relevant information when the condition change request is generated in a case where it is determined that the traveling state changed by the operation of the driving operation element is the specific state.

2. The driving assist device according to claim 1, further comprising a notification device (51, 52, 53, 70) configured to notify the driver of a result of a determination of whether the traveling state is the specific state, the determination being performed by the determination unit.

3. The driving assist device according to claim 1, wherein the driving assist control unit is configured to:

perform one of first driving assist control and second driving assist control, the first driving assist control being control for controlling the own vehicle such that the own vehicle travels in a state where a predetermined target traveling condition is met, and the second driving assist control being control for controlling the own vehicle such that the own vehicle travels in a state where the target traveling condition changed by the condition change request is met; and

start to execute the second driving assist control when the target traveling condition is changed by the condition change request while performing the first driving assist control.

4. The driving assist device according to claim 3, wherein the driving assist control unit is configured to continue to execute the first driving assist control when the determination unit determines that the traveling state changed, while executing the first driving assist control, by the operation of the driving operation element.

5. The driving assist device according to claim 3, wherein the driving assist control unit is configured to start to execute the first driving assist control when the determination unit determines that the traveling state is not the specific state while performing the second driving assist control.

6. The driving assist device according to claim 1 or 2, wherein:

the driving operation element includes at least one of an accelerator operation element (11a) and a brake operation element (12a), the accelerator operation element being operated for accelerating the own vehicle, the brake operation element being operated for decelerating the own vehicle;
the information acquisition unit is configured to acquire information about a follow-up object vehicle (110) and a follow-up inter-vehicle distance (Dfx(a)) as the traveling state relevant information, the follow-up object vehicle being another vehicle that travels immediately ahead of the own vehicle, and the follow-up inter-vehicle distance being a distance between the follow-up object and the own vehicle;
the driving assist control unit is configured to execute adaptive cruise control by using, as the target traveling condition, a condition that the own vehicle travels so as to follow the follow-up object vehicle while keeping a predetermined target inter-vehicle distance between the own vehicle and the follow-up object vehicle; and
the condition change unit is configured to change the target traveling condition based on the follow-up inter-vehicle distance that is included in the traveling state relevant information at a change request acceptance time point, the change request acceptance time point being a time point when the condition change request is generated in the case where it is determined that the traveling state is the specific state.

7. The driving assist device according to claim 6, wherein the condition change unit is configured to change the target traveling condition by setting, as the target inter-vehicle distance (Dtgt2), the follow-up inter-vehicle distance included in the traveling state relevant information at the change request acceptance time point.

8. The driving assist device according to claim 6, wherein:

the information acquisition unit is configured to acquire information about a vehicle speed (SPD) of the own vehicle as the traveling state relevant information; and
the condition change unit is configured to
calculate an inter-vehicle time (Ta), by dividing the follow-up inter-vehicle distance that is included in the traveling state relevant information at the change request acceptance time point, by the vehicle speed of the own vehicle that is included in the traveling state relevant information at the change request acceptance time point, and
change the target traveling condition, by setting a distance corresponding to a product of the calculated inter-vehicle time and the vehicle speed of the own vehicle that is included in the traveling state relevant information, as the target inter-vehicle distance (Dtgt).

9. The driving assist device according to claim 6, wherein:

the information acquisition unit is configured to acquire information about a vehicle speed (SPD) of the own vehicle, as the traveling state relevant information; and
the determination unit is configured to determine that the traveling state is the specific state, when the follow-up inter-vehicle distance that is included in the traveling state relevant information is larger than a distance threshold (202), the distance threshold being larger as the vehicle speed of the own vehicle that is included in the traveling state relevant information is higher.

10. The driving assist device according to claim 1 or 2, wherein:

the driving operation element includes a steering wheel (SW) by which a steering state of the own vehicle is changed;

the information acquisition unit is configured to acquire information about a first distance (dw1) and a second distance (dw2) as the traveling state relevant information, the first distance being a distance in a road width direction between a first mark line (LL) and the own vehicle, the first mark line being a road mark line on a left side in a region in front of the own vehicle, the second distance being a distance in the road width direction between a second mark line (RL) and the own vehicle, and the second mark line being a road mark line on a right side in the region in front of the own vehicle;

the driving assist control unit is configured to execute lane keeping control by using, as the target traveling condition, a condition that the own vehicle travels along a target traveling line (TL), the target traveling line being set in a traveling lane that is specified by the first mark line and the second mark line; and

the condition change unit is configured to change the target traveling condition by changing the target traveling line based on at least one of the first distance and the second distance that are included in the traveling state relevant information at a change request acceptance time point, the change request acceptance time point being a time point when the condition change request is generated in the case where it is determined that the traveling state is the specific state.

11. The driving assist device according to claim 10, wherein the driving assist control unit is configured to set, as the target traveling line, a line located a target lateral distance from a reference mark line, the reference mark line being at least one of the first mark line and the second mark line.

12. The driving assist device according to claim 11, wherein the driving assist control unit is configured to:

   set the first mark line as the reference mark line when the first distance is smaller than the second distance; and
   set the second mark line as the reference mark line when the second distance is smaller than the first distance.

13. The driving assist device according to claim 11, wherein the condition change unit is configured to:

   store, as the target lateral distance, the first distance that is included in the traveling state relevant information at the change request acceptance time point when the first mark line is set as the reference mark line;
   store, as the target lateral distance, the second distance that is included in the traveling state relevant information at the change request acceptance time point when the second mark line is set as the reference mark line; and
   change the target traveling condition by changing the target traveling line based on the target lateral distance which is stored.

14. The driving assist device according to any one of claims 10 to 13, wherein the determination unit is configured to determine that the traveling state is the specific state, when both of the first distance and the second distance that are included in the traveling state relevant information are equal to or larger than a predetermined distance threshold (Lth).

# FIG. 1

EP 3 608 192 A2

ACCELERATOR PEDAL OPERATION AMOUNT SENSOR — 11

11a

BRAKE PEDAL OPERATION AMOUNT SENSOR — 12

12a

STEERING ANGLE SENSOR — 13

SW
US

STEERING TORQUE SENSOR — 14

SPEED SENSOR — 15

YAW RATE SENSOR — 16

17
RADAR SENSOR — 17a
CAMERA SENSOR — 17b

OPERATION SWITCH — 18

DRIVING ASSIST ECU — 10

CPU

RAM

ROM

NON-VOLATILE MEMORY

I/F

AP

BP

θ

Tra

SPD

YRa

ENGINE ECU — 20

BRAKE ECU — 30

STEERING ECU — 40

DISPLAY ECU — 50

ACC CONDITION SETTING BUTTON — 60

SPEAKER — 70

ENGINE ACTUATOR — 21

22

BRAKE ACTUATOR — 31

32b
32a
32

MOTOR DRIVER — 41

M — 42

DISPLAY DEVICE — 51

FIRST INDICATOR — 52

# FIG. 2

INTER-VEHICLE DISTANCE

201: Tdef × SPD + α

202: Tmin × SPD + β

211: FIRST REGION

212: SECOND REGION

VEHICLE SPEED SPD

# FIG. 3A

t1

SPD1 ⟶ Dfx1

100          110

FIRST ACC MODE

t2

SPD2 ⟶ Dfx2

100          110

SECOND ACC MODE

# FIG. 3B

INTER-VEHICLE
DISTANCE

201: $Tdef \times SPD + \alpha$

202: $Tmin \times SPD + \beta$

211

P1(SPD1, Dfx1)

Dfx1

Dfx2

P2(SPD2, Dfx2)

301

212

SPD1

SPD2

VEHICLE SPEED
SPD

# FIG. 4A

t1                                              t2'

SPD1 → Dfx1 ⊞                    SPD3 → Dfx3 ⊞

100          110                    100          110

FIRST ACC MODE

# FIG. 4B

INTER-VEHICLE
DISTANCE

201: Tdef × SPD + α

211

202: Tmin × SPD + β

Pa

P1(SPD1, Dfx1)   ● 401

Dfx1

Dfx3                    P3(SPD3, Dfx3)

212

SPD1                    VEHICLE SPEED
          SPD3              SPD

# FIG. 5A

t2                                              t3

SPD2 →  Dfx2                    SPD4 →  Dfx2

100            110                    100            110

SECOND ACC MODE

# FIG. 5B

INTER-VEHICLE
DISTANCE

201: Tdef × SPD + α

202: Tmin × SPD + β

Pc

211

Pb

501'

301

P1(SPD1, Dfx1)

501

Dfx2

P4(SPD4, Dfx2)

P2(SPD2, Dfx2)

212

SPD4    VEHICLE SPEED
SPD

# FIG. 6

ACC START-END
DETERMINATION — 600

610

ACC EXECUTION
FLAG F1 = 0 ?          NO

YES

620

IS ACC EXECUTION
CONDITION SATISFIED?
(ACC START REQUEST IS GENERATED
AND
PRECEDING VEHICLE IS DETECTED)          NO

YES

640

IS ACC END CONDITION
SATISFIED?
(ACC END REQUEST IS GENERATED
OR
PRECEDING VEHICLE IS NOT DETECTED)          NO

YES

650

ACC EXECUTION FLAG F1 ← 0
ACC MODE FLAG F2 ← 0

Dfx

Dfy

FOLLOW-UP OBJECT
VEHICLE AREA

630

ACC EXECUTION FLAG F1 ← 1

660

IS ACC SUSPENSION
CONDITION SATISFIED?
(DRIVER IS OPERATING
ACCELERATOR PEDAL OR
BRAKE PEDAL)          NO

YES

670

ACC SUSPENSION FLAG F3 ← 1

680

ACC SUSPENSION FLAG F3 ← 0

RETURN — 695

EP 3 608 192 A2

# FIG. 7

ACC EXECUTION — 700

ACC EXECUTION FLAG F1 = 1 AND
ACC SUSPENSION FLAG F3 = 0 ? — 710
NO → (left)
YES

SPECIFY ACC OBJECT VEHICLE — 720

ACC MODE FLAG F2 = 0 ? — 730
NO → SECOND ACC MODE
FIRST ACC MODE | YES

TARGET INTER-VEHICLE DISTANCE
$Dtgt1 \leftarrow Tdef \times SPD + \alpha$ — 740

INTER-VEHICLE DEVIATION
$\Delta D1 \leftarrow Dfx(a) - Dtgt1$ — 750

INTER-VEHICLE DEVIATION
$\Delta D1 \leftarrow Dfx(a) - Dtgt2$ — 760

COMPUTE TARGET ACCELERATION Gtgt — 770
ACCELERATION: $Gtgt \leftarrow ka1 \bullet ( k1 \bullet \Delta D1 + k2 \bullet Vfx(a) )$
DECELERATION: $Gtgt \leftarrow kd1 \bullet ( k1 \bullet \Delta D1 + k2 \bullet Vfx(a) )$

EXECUTE ACC — 780
(CONTROL BY WHICH ACTUAL ACCELERATION OF
VEHICLE COINCIDES WITH Gtgt)

RETURN — 795

35

# FIG. 8

211: FIRST REGION

INTER-VEHICLE
DISTANCE

VEHICLE SPEED

FIRST SPECIFIC STATE DETERMINATION — 800

810

NO — ACC EXECUTION FLAG F1 = 1 ?

YES

820

IS DRIVING STATE OF OWN VEHICLE AT
CURRENT TIME POINT FIRST SPECIFIC STATE?
(IS POINT SPECIFIED BY VEHICLE SPEED AND
INTER-VEHICLE DISTANCE IN FIRST REGION?)      NO

YES

830

TURN ON FIRST INDICATOR

840

FIRST SPECIFIC
STATE FLAG F4 ← 1

850

TURN OFF FIRST
INDICATOR

860

FIRST SPECIFIC
STATE FLAG F4 ← 0

870

NO — ACC MODE FLAG F2 = 1 ?

YES

880

ACC MODE FLAG F2 ← 0

890

GIVE NOTICE TO DRIVER

RETURN — 895

# FIG. 9

ACC CONDITION SETTING — 900

NO

FIRST SPECIFIC STATE FLAG F4 = 1 ? — 910

YES

NO

HAS ACC CONDITION SETTING BUTTON BEEN DEPRESSED? — 920

YES

Dtgt2 ← INTER-VEHICLE DISTANCE Dfx(a) AT CURRENT TIME POINT — 930

ACC MODE FLAG F2 ← 1 — 940

RETURN — 995

# FIG. 10

ACC MODE INITIALIZATION —1000

1010

ACC MODE FLAG F2 = 1 ?

NO

YES 1020

HAS SPECIFIC OPERATION OF ACC CONDITION SETTING BUTTON BEEN PERFORMED?

NO

YES 1030

ACC MODE FLAG F2 ← 0

RETURN —1095

# FIG. 11A

t1

SPD1 → Dfx1

100   110

FIRST ACC MODE

t2

SPD2 → Dfx2

100   INTER-VEHICLE   110
TIME T1

# FIG. 11B

INTER-VEHICLE DISTANCE

201: Tdef × SPD + α

202: Tmin × SPD + β

211

P1(SPD1, Dfx1)

1101: T1 × SPD + α

P2(SPD2, Dfx2)

212

VEHICLE SPEED SPD

# FIG. 12

```
        ACC EXECUTION                    1200

                    710
  NO    ACC EXECUTION FLAG F1 = 1 AND
        ACC SUSPENSION FLAG F3 = 0 ?

              YES     720

        SPECIFY ACC OBJECT VEHICLE


                    730
                                         NO   SECOND ACC MODE
        ACC MODE FLAG F2 = 0 ?

   FIRST ACC MODE   YES
                            1210                              1220
  TARGET INTER-VEHICLE DISTANCE        TARGET INTER-VEHICLE DISTANCE
  Dtgt ← Tdef × SPD + α                Dtgt ← Ta × SPD + α


                    1230
  INTER-VEHICLE DEVIATION ΔD1 ←
  INTER-VEHICLE DISTANCE Dfx(a) – TARGET INTER-VEHICLE DISTANCE Dtgt


                    770
  COMPUTE TARGET ACCELERATION Gtgt
  ACCELERATION: Gtgt ← ka1 • (k1 • ΔD1 + k2 • Vfx(a))
  DECELERATION: Gtgt ← kd1 • (k1 • ΔD1 + k2 • Vfx(a))


                    780
  EXECUTE ACC
  (CONTROL BY WHICH ACTUAL ACCELERATION OF
  VEHICLE COINCIDES WITH Gtgt)


        RETURN                           1295
```

EP 3 608 192 A2

# FIG. 13

ACC CONDITION SETTING ～1300

910
FIRST SPECIFIC STATE FLAG F4 = 1 ?  
NO

YES  920
HAS ACC CONDITION SETTING BUTTON BEEN DEPRESSED?  
NO

YES  1310
Ta ← INTER-VEHICLE TIME Tnow AT CURRENT TIME POINT

940
ACC MODE FLAG F2 ← 1

RETURN ～1395

41

# FIG. 14

EP 3 608 192 A2

## FIG. 15

## FIG. 16

# FIG. 17

LTC START/END DETERMINATION ~1700

┌1710
LTC EXECUTION FLAG F5 = 0 ? — NO

YES
┌1720
IS LTC EXECUTION CONDITION SATISFIED?
(ACC IS BEING EXECUTED, EXECUTION OF LTC IS SELECTED, AND RIGHT AND LEFT WHITE LINES ARE RECOGNIZED) — NO

YES
┌1730
LTC EXECUTION FLAG F5 ← 1

┌1740
IS LTC END CONDITION SATISFIED?
(ACC IS ENDED, END OF LTC IS SELECTED, OR RIGHT OR LEFT WHITE LINE IS NOT RECOGNIZED) — NO

YES
┌1750
LTC EXECUTION FLAG F5 ← 0
LTC MODE FLAG F6 ← 0

RETURN ~1795

# FIG. 18

```
        ┌─────────────────────────┐
        │     LTC EXECUTION       │── 1800
        └─────────────────────────┘
                     │
                     │         ┌─ 1810
  NO       ╱─────────────────────────╲
  ┌────────⟨  LTC EXECUTION FLAG F5 = 1 ?  ⟩
  │        ╲─────────────────────────╱
  │                  │ YES
  │                  │         ┌─ 1820                NO      SECOND LTC MODE
  │        ╱─────────────────────────╲ ────────────────────────────────┐
  │       ⟨   LTC MODE FLAG F6 = 0 ?   ⟩                                │
  │        ╲─────────────────────────╱                                 │
  │   FIRST LTC MODE │ YES                                             │
  │                  │         ┌─ 1830                         ┌─ 1840  │
  │      ┌───────────────────────────┐    ┌─────────────────────────────────┐
  │      │     SET CENTERLINE         │    │   SET POSITION THAT IS TARGET   │
  │      │  AS TARGET TRAVELING LINE  │    │   DISTANCE Ltgt AWAY FROM       │
  │      └───────────────────────────┘    │   REFERENCE WHITE LINE,         │
  │                  │                     │   AS TARGET TRAVELING LINE      │
  │                  │◄────────────────────└─────────────────────────────────┘
  │                  │         ┌─ 1850
  │      ┌───────────────────────────┐
  │      │     COMPUTE TARGET         │
  │      │   STEERING ANGLE θ*        │
  │      └───────────────────────────┘
  │                  │         ┌─ 1860
  │      ┌───────────────────────────┐
  │      │      EXECUTE LTC           │
  │      │ (CONTROL BY WHICH ACTUAL   │
  │      │ STEERING ANGLE θ COINCIDES │
  │      │  WITH TARGET STEERING      │
  │      │       ANGLE θ*)            │
  │      └───────────────────────────┘
  │                  │
  └──────────────────┤
                     │
        ┌─────────────────────────┐
        │        RETURN           │── 1895
        └─────────────────────────┘
```

# FIG. 19

SECOND SPECIFIC STATE DETERMINATION ⟩~1900

NO ⟨ LTC EXECUTION FLAG F5 = 1 ? ⟩ ~1910

YES ~1920

IS TRAVELING STATE OF OWN VEHICLE AT
CURRENT TIME POINT SECOND SPECIFIC STATE?
(IS DISTANCE BETWEEN OWN VEHICLE AND WHITE LINE
EQUAL TO OR LARGER THAN DISTANCE THRESHOLD Lth?) NO

YES

~1930
TURN ON
SECOND INDICATOR

~1950
TURN OFF
SECOND INDICATOR

~1940
SECOND SPECIFIC
STATE FLAG F7 ← 1

~1960
SECOND SPECIFIC
STATE FLAG F7 ← 0

RETURN ⟩~1995

# FIG. 20

```
        LTC CONDITION SETTING                    2000

                                    2010
NO      SECOND SPECIFIC STATE FLAG F7 = 1 ?

                        YES         2020
NO      HAS LTC CONDITION SETTING BUTTON
        BEEN DEPRESSED?

                        YES         2030
        STORE INFORMATION OF
        REFERENCE WHITE LINE IN RAM
        TARGET DISTANCE Ltgt ← Min(dw1, dw2)

                                    2040
        LTC MODE FLAG F6 ← 1


                RETURN                           2095
```

# FIG. 21

LTC MODE INITIALIZATION ~2100

LTC MODE FLAG F6 = 1 ? /2110

NO

YES

HAS SPECIFIC OPERATION OF LTC CONDITION SETTING BUTTON BEEN PERFORMED? /2120

NO

YES

LTC MODE FLAG F6 ← 0 /2130

RETURN ~2195

# FIG. 22

INTER-VEHICLE
DISTANCE

201: Tdef × SPD + α

202: Tmin × SPD + β

211

301

Dfx2

P1(SPD1, Dfx1)

2201  Pd

P5(SPD5, Dfx2)

P2(SPD2, Dfx2)

212

SPD5

VEHICLE SPEED
SPD

# FIG. 23

LL

TL

RL

Lwd × Rtgt

Lwd

dw1

dw2

100

**REFERENCES CITED IN THE DESCRIPTION**

**Patent documents cited in the description**

- JP 2009040414 A
- JP 2016218649 A
- JP 2014148293 A
- JP 2006315491 A
- JP 4172434 B

- JP 4929777 B
- JP 2008195402 A
- JP 2009190464 A
- JP 2010006279 A
- JP 4349210 B